# EUROPEAN PATENT APPLICATION

(11) **EP 3 835 104 A1**
(43) Date of publication of application: **16.06.2021**
(21) Application number: 19846679.9
(22) Date of filing: 08.08.2019
(51) Int. Cl.: B60K 35/00, B60R 11/02, G09G 5/00, G09G 5/38

(54) **DISPLAY SYSTEM**

(30) Priority: 09.08.2018 JP 2018150403
(71) Applicant: Panasonic Intellectual Property Management Co., Ltd., Osaka-shi, Osaka 540-6207 (JP)
(72) Inventor: MATSUI, Satoshi, Osaka-shi, Osaka 540-6207 (JP); KATSUYAMA, Norikazu, Osaka-shi, Osaka 540-6207 (JP)
(74) Representative: Eisenführ Speiser
(86) International application number: PCT/JP2019/031446
(87) International publication number: WO 2020/032189

(57) **Abstract**

The present disclosure provides a display system that displays an image in front of a windshield of a moving body. The display system includes a projection device that projects light representing the image to the windshield, an information acquisition device that acquires speed information indicating a speed of the moving body, a detection device that detects posture variation of the moving body, a display processing device that controls a display position of the image based on a reference position and a correction amount, and a correction processing device that sets the correction amount based on posture variation of the moving body. The correction processing device determines, based on the speed information, whether or not a speed of the moving body is equal to or less than a first threshold. The correction processing device adjusts the correction amount to a value equal to or less than a correction amount immediately before a speed of the moving body becomes equal to or less than the first threshold in a case of determining that the speed of the moving body is equal to or less than the first threshold.

## Description

### TECHNICAL FIELD

The present disclosure relates to a display system that controls a display position of an image according to the movement of a moving body.

### BACKGROUND ART

Patent Document 1 discloses a vehicle information projection system that performs augmented reality (AR) display using a head-up display (HUD) device. The HUD device projects light representing a virtual image on the windshield of a vehicle so that a viewer who is an occupant of the vehicle visually recognizes the virtual image together with an actual view of the outside world of the vehicle. For example, a virtual image representing a guide route of the vehicle is displayed in association with a display target, for example, a road, in an actual view. In this manner, the occupant can confirm the guide route while visually recognizing the actual view. The vehicle information projection system of Patent Document 1 corrects a display position of the virtual image according to an acceleration. This restricts generation of position displacement of the virtual image when the vehicle is suddenly decelerated and suddenly accelerated.

### PRIOR ART DOCUMENTS

### PATENT DOCUMENTS

Patent Document 1: JP 2015-101311 A

### SUMMARY OF THE INVENTION

### PROBLEMS TO BE SOLVED BY THE INVENTION

The present disclosure provides a display system that suppresses position displacement of an image with high accuracy.

### MEANS FOR SOLVING THE PROBLEMS

A display system of the present disclosure is a display system that displays an image in front of a windshield of a moving body. The display system includes: a projection device that projects light representing the image to the windshield; an information acquisition device that acquires speed information indicating a speed of the moving body; a detection device that detects posture variation of the moving body; a display processing device that controls a display position of the image based on a reference position and a correction amount; and a correction processing device that sets the correction amount based on posture variation of the moving body. The correction processing device determines, based on the speed information, whether or not a speed of the moving body is equal to or less than a first threshold. The correction processing device adjusts the correction amount to a value equal to or less than a correction amount immediately before a speed of the moving body becomes equal to or less than the first threshold in a case of determining that the speed of the moving body is equal to or less than the first threshold.

These general and specific aspects may be realized by a system, a method, and a computer program, and a combination of these.

### EFFECTS OF THE INVENTION

According to the display system of the present disclosure, a correction amount of a display position of an image is adjusted according to a speed of a moving body. In this manner, it is possible to suppress the position displacement of the image with high accuracy. Specifically, the display system adjusts the correction amount when the speed of the moving body is equal to or less than a first threshold to a value equal to or less than a correction amount immediately before the speed of the moving body becomes equal to or less than the first threshold. In this manner, it is possible to prevent the image from being significantly displaced from the reference position when the speed is low.

### BRIEF DESCRIPTION OF THE DRAWINGS

FIG. 1 is a diagram for explaining a head-up display (HUD).
FIG. 2 is a block diagram showing a configuration of a projection system in a first embodiment.
FIG. 3 is a diagram showing an example of an actual view as seen from a windshield.
FIG. 4 is a diagram showing an example of a virtual image.
FIG. 5A shows a vehicle that is not leaning.
FIG. 5B is a diagram for explaining an example in which the virtual image is displayed at a reference position when a vehicle is not leaning.
FIG. 6A shows a vehicle in a forward leaning posture.
FIG. 6B is a diagram for explaining an example in which position displacement of the virtual image is generated when a vehicle is in the forward leaning posture.
FIG. 7 is a diagram for explaining correction of a display position of the virtual image.
FIG. 8 is a diagram for explaining position displacement of the virtual image due to noise of a gyro sensor.
FIG. 9 is a flowchart showing display processing in the first to fifth embodiments.
FIG. 10 is a flowchart showing correction processing in the first embodiment.
FIG. 11 is a diagram for explaining calculation of a correction amount in the first embodiment.
FIG. 12 is a flowchart showing correction processing in a second embodiment.
FIG. 13 is a diagram for explaining calculation of the correction amount in the second embodiment.
FIG. 14 is a diagram for explaining calculation of the correction amount in the second embodiment.
FIG. 15 is a flowchart showing correction processing in a third embodiment.
FIG. 16 is a flowchart showing correction processing in a first variation of the third embodiment.
FIG. 17 is a flowchart showing correction processing in a second variation of the third embodiment.
FIG. 18 is a flowchart showing correction processing in a fourth embodiment.
FIG. 19 is a flowchart showing correction processing in a fifth embodiment.
FIG. 20 is a flowchart showing correction processing in a sixth embodiment.
FIG. 21 is a flowchart showing correction processing in a seventh embodiment.
FIG. 22 is a block diagram showing a configuration of a display device in an eighth embodiment.

### MODE(S) FOR CARRYING OUT THE INVENTION

### (Findings that form the basis of the present disclosure)

In a case where a display position of an image is corrected according to a state of a moving body detected based on the output of a sensor, for example, a posture of a vehicle, a correction error due to noise of the sensor is generated. For example, it is conceivable to use a gyro sensor in order to detect, with high accuracy, vibration of the vehicle due to a shape such as unevenness of a road surface. A roll angle, a pitch angle, and a yaw angle, which are angles around three axes of the vehicle are obtained by integrating the angular velocities detected by the gyro sensor. However, in the gyro sensor, due to the characteristics of a device, the angular velocity of the output does not become zero even in a stationary state. What is called drift occurs. Due to the above, even when the speed of the vehicle is low or the vehicle is stopped, that is, even in a case where vibration of the vehicle is hardly generated, a correction error due to the influence of the drift is generated, and the display position of the virtual image is changed. For example, the display position of the virtual image moves away from a reference position. Therefore, a viewer feels uncomfortable with the display of the virtual image. Further, if correction is performed constantly or for a long time based on the output of the gyro sensor, the correction error is accumulated, and there is a case where the display position of the virtual image is greatly displaced with respect to a predetermined display target, for example, road, in an actual view.

The display system of the present disclosure sets the correction amount of the display position of the image so that the display position of the image does not change in a direction away from the reference position when the speed of the moving body is equal to or less than a predetermined value. Specifically, the projection system determines whether or not the speed of the moving body is equal to or less than a first threshold based on speed information, and adjusts a correction amount to a value equal to or less than a correction amount immediately before the speed of the moving body becomes equal to or less than the first threshold in a case of determining that the speed of the moving body is equal to or less than the first threshold. In this manner, position displacement of the virtual image is suppressed with high accuracy.

### (First embodiment)

Hereinafter, the first embodiment will be described with reference to the drawings. In the first embodiment, a case where the moving body is a vehicle such as an automobile and the display system is a head-up display (HUD) system that displays a virtual image in front of the windshield of the vehicle will be described as an example. In the first embodiment, while the speed of the vehicle is equal to or less than the first threshold, the correction amount is held at a value immediately before the speed of the vehicle becomes equal to or less than the first threshold. In this manner, the correction error due to the drift of the gyro sensor is reduced.

### 1. Configuration of projection system

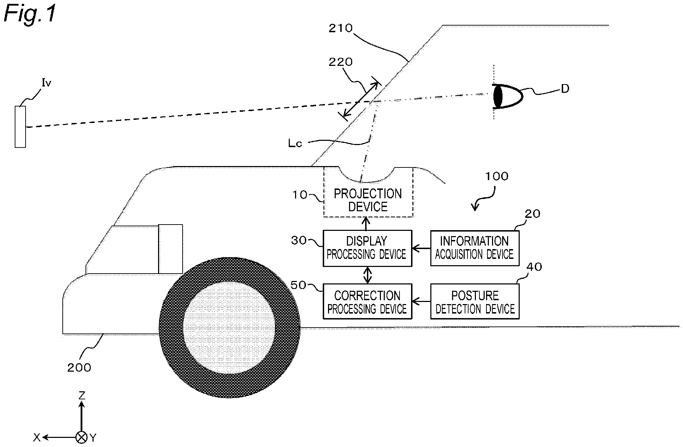

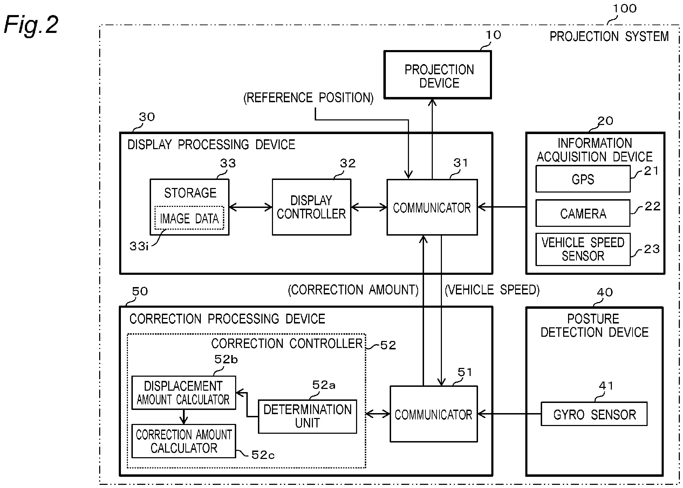

A configuration of the projection system of the present embodiment will be described with reference to FIGS. 1 and 2.

FIG. 1 is a diagram for explaining a head-up display (HUD). In FIG. 1, a roll axis of a vehicle 200 is the X axis, a pitch axis of the vehicle 200 is the Y axis, and a yaw axis of the vehicle 200 is the Z axis. That is, the X axis is an axis that is orthogonal to the Y axis and the Z axis and is along a line-of-sight direction of an occupant D who visually recognizes a virtual image Iv. The Y axis is an axis along the left-right direction when viewed from the occupant D who visually recognizes the virtual image Iv. The Z axis is an axis along the height direction of the vehicle 200.

A projection system 100 of the present embodiment is an HUD system that performs what is called augmented reality (AR) display in which the virtual image Iv is superimposed on an actual view in front of a windshield 210 of the vehicle 200. The virtual image Iv indicates predetermined information. For example, the virtual image Iv is a figure and a character indicating a route for guiding to a destination, an estimated time of arrival at the destination, a traveling direction, a speed, various warnings, and the like. The projection system 100 is installed in the vehicle 200 and projects display light Lc representing the virtual image Iv into a display area 220 of the windshield 210 of the vehicle 200. In the present embodiment, the display area 220 is a partial area of the windshield 210. Note that the display area 220 may be the entire area of the windshield 210. The display light Lc is reflected by the windshield 210 toward the inside of the vehicle. In this manner, the occupant D in the vehicle 200 visually recognizes the reflected display light Lc as the virtual image Iv in front of the vehicle 200.

The projection system 100 includes a projection device 10, an information acquisition device 20, a display processing device 30, a posture detection device 40, and a correction processing device 50.

The projection device 10 projects the display light Lc representing the virtual image Iv into the display area 220. The projection device 10 includes, for example, a liquid crystal display element that displays an image of the virtual image Iv, a light source such as an LED that illuminates the liquid crystal display element, a mirror and a lens that reflect the display light Lc of the image displayed by the liquid crystal display element onto the display area 220, and the like. The projection device 10 is installed, for example, in the dashboard of the vehicle 200.

The information acquisition device 20 acquires information indicating a position of the vehicle, a condition outside the vehicle, and a speed of the vehicle traveling on the road. Specifically, the information acquisition device 20 measures a position of the vehicle 200 and generates position information indicating the position. The information acquisition device 20 generates outside-vehicle information indicating an object, a distance to the object, and the like. The object is a person, a sign, a road, or the like. The information acquisition device 20 detects the speed of the vehicle and generates speed information indicating the speed of the vehicle. The information acquisition device 20 outputs the position information, the outside-vehicle information, and the speed information of the vehicle 200.

The display processing device 30 controls the display of the virtual image Iv based on the position information and the outside-vehicle information of the vehicle 200 obtained from the information acquisition device 20 and outputs image data of the virtual image Iv to the projection device 10. The display processing device 30 may control the display of the virtual image Iv based on the position information and the outside-vehicle information of the vehicle 200. The display processing device 30 outputs the speed information of the vehicle 200 acquired from the information acquisition device 20 to the correction processing device 50, and acquires a correction amount of the display position of the virtual image Iv from the correction processing device 50.

The posture detection device 40 detects a posture variation of the vehicle 200.

The correction processing device 50 calculates the correction amount of the display position of the virtual image Iv based on the posture variation of the vehicle 200 detected by the posture detection device 40 and the speed information of the vehicle 200 acquired by the information acquisition device 20. The correction processing device 50 outputs the calculated correction amount to the display processing device 30.

FIG. 2 is a block diagram showing an internal configuration of the projection system 100.

In the present embodiment, the information acquisition device 20 includes a global positioning system (GPS) module 21, a camera 22, and a vehicle speed sensor 23.

The GPS module 21 detects the position indicating the current position of the vehicle 200 in a geographical coordinate system. Specifically, the GPS module 21 receives radio waves from GPS satellites and measures the latitude and longitude of the receiving point. The GPS module 21 generates position information indicating the measured latitude and longitude.

The camera 22 captures an outside view and generates captured image data. The information acquisition device 20 identifies, for example, an object from the captured image data by image processing and measures a distance to the object. The information acquisition device 20 generates, as the outside-vehicle information, information indicating an object, a distance to the object, and the like.

The vehicle speed sensor 23 detects the speed of the vehicle 200 and generates the speed information.

The information acquisition device 20 outputs the position information, the outside-vehicle information, and the speed information to the display processing device 30. Note that the captured image data generated by the camera 22 may be output to the display processing device 30.

The display processing device 30 includes a communicator 31, a display controller32, and a storage 33.

The communicator 31 includes a circuit that communicates with an external device according to a predetermined communication standard. The predetermined communication standard includes, for example, LAN, Wi-Fi (registered trademark), Bluetooth (registered trademark), USB, HDMI (registered trademark), controller area network (CAN), and serial peripheral interface (SPI).

The display controller 32 can be realized by a semiconductor element or the like. The display controller 32 can be composed of, for example, a microcomputer, a CPU, an MPU, a GPU, a DSP, an FPGA, and an ASIC. A function of the display controller 32 may be configured only by hardware, or may be realized by combining hardware and software. The display controller 32 realizes a predetermined function by reading data and a program stored in the storage 33 and performing various types of arithmetic processing.

The storage 33 is a storage medium that stores a program and data required to realize a function of the display processing device 30. The storage 33 can be realized by, for example, a hard disk (HDD), an SSD, a RAM, a DRAM, a ferroelectric memory, a flash memory, a magnetic disk, or a combination of these.

The storage 33 stores a plurality of pieces of image data 33i representing the virtual image Iv.

The display controller 32 determines the virtual image Iv to be displayed based on the position information and the outside-vehicle information obtained from the information acquisition device 20. The display controller 32 reads out the image data 33i of the determined virtual image Iv from the storage 33 and outputs the data to the projection device 10. The display controller 32 acquires information indicating the reference position for displaying the virtual image Iv from an external device (not shown) via the communicator 31. The display controller 32 outputs the speed information indicating the vehicle speed acquired from the information acquisition device 20 to the correction processing device 50, and acquires a correction amount corresponding to the speed information from the correction processing device 50. The display controller 32 sets the display position of the virtual image Iv based on the reference position and the correction amount.

The posture detection device 40 includes a gyro sensor 41 that detects an angular velocity. The gyro sensor 41 outputs the detected angular velocity to the correction processing device 50 as posture variation information indicating a posture variation of the vehicle 200.

The correction processing device 50 includes a communicator 51 and a correction controller 52.

The communicator 51 includes a circuit that communicates with an external device according to a predetermined communication standard. The predetermined communication standard includes, for example, LAN, Wi-Fi (registered trademark), Bluetooth (registered trademark), USB, HDMI (registered trademark), controller area network (CAN), and serial peripheral interface (SPI).

The correction controller 52 can be realized by a semiconductor element or the like. The correction controller 52 can be composed of, for example, a microcomputer, a CPU, an MPU, a GPU, a DSP, an FPGA, and an ASIC. A function of the display controller 32 may be configured only by hardware, or may be realized by combining hardware and software. The correction controller 52 realizes a predetermined function by reading data and a program stored in a storage (not shown) in the correction processing device 50 and performing various types of arithmetic processing.

The correction controller 52 includes a determination unit 52a, a displacement amount calculator 52b, and a correction amount calculator 52c as a functional configuration.

The determination unit 52a determines whether or not the speed of the vehicle 200 is larger than the first threshold based on the speed information of the vehicle 200.

The displacement amount calculator 52b calculates a displacement amount of an angle around three axes indicating the posture of the vehicle 200 based on the posture variation information output by the posture detection device 40. For example, the displacement amount calculator 52b calculates an angle (a pitch angle) around a pitch axis of the vehicle 200 by integrating the angular velocity detected by the gyro sensor 41. In this manner, a displacement amount (angle) of the vehicle 200 in a rotation direction around the Y axis (pitch axis) shown in FIG. 1 can be calculated. Similarly, a yaw angle or a roll angle may be calculated, and, for example, all the angles around the X axis, the Y axis, and the Z axis may be calculated. This makes it possible to calculate a displacement amount of the angle of the vehicle 200 around the X axis, the Y axis, and the Z axis shown in FIG. 1. Note that, in the present embodiment, all angles around the three axes are calculated. However, an angle around one axis or two axes may also be calculated. For example, the configuration may be such that only angles around the Y axis and the Z axis are calculated.

The correction amount calculator 52c calculates a correction amount of the display position of the virtual image Iv according to a displacement amount indicating the posture of the vehicle 200. The correction amount is indicated by the number of pixels, for example. Specifically, the correction amount calculator 52c converts the displacement amounts of the pitch angle and the yaw angle calculated by the displacement amount calculator 52b from angles into the number of pixels, and determines a correction amount by which the number of pixels corresponding to the displacement is eliminated. For example, for the roll angle, the correction amount calculator 52c determines a correction amount by which the displacement amount of the roll angle is eliminated without conversion of the angle. The correction amount calculator 52c outputs the calculated correction amount to the display processing device 30.

As described above, the display processing device 30 and the correction processing device 50 bidirectionally communicate with each other by the communicators 31 and 51. The display processing device 30 outputs the speed information indicating a vehicle speed to the correction processing device 50. The correction processing device 50 outputs correction information indicating a correction amount to the display processing device 30.

### 2. AR display

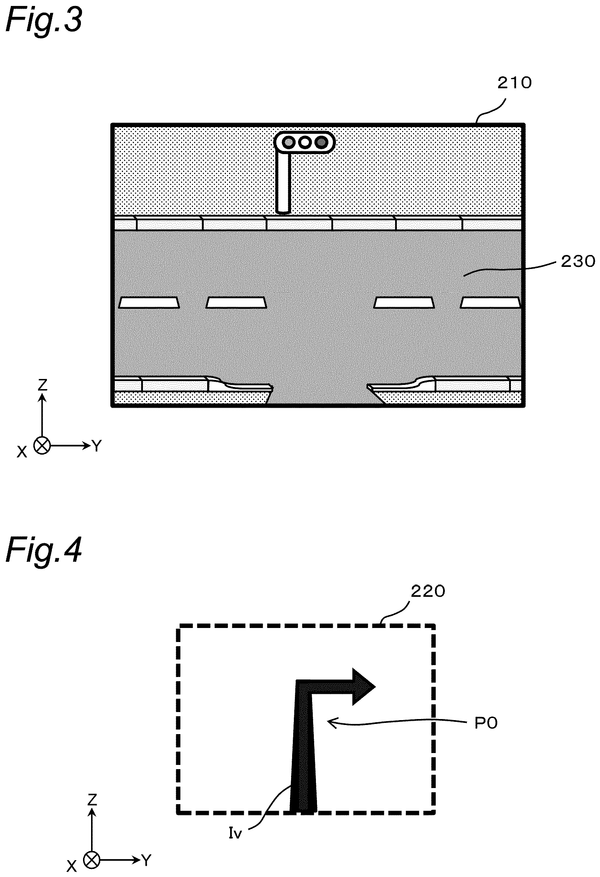

AR display will be described with reference to FIGS. 3 to 8.

FIG. 3 shows an example of an actual view seen from the windshield 210 of the vehicle 200. FIG. 4 shows an example of the virtual image Iv seen from the display area 220. The projection system 100 superimposes the virtual image Iv shown in FIG. 4 on the actual view shown in FIG. 3. A reference position P0 of the virtual image Iv is a position determined based on the type of the virtual image Iv, the state of the vehicle 200, for example, a position and a posture of the vehicle 200, map data, and the like, and the reference position P0 is determined by an external device. For example, in a case where a display target 230 is a cruising lane and the virtual image Iv is an arrow indicating a traveling direction, the reference position P0 is the center of the cruising lane. The reference position P0 is set, for example, at a position of a pixel on liquid crystal display corresponding to the values of the Y coordinate and the Z coordinate in the display area 220 in FIG. 4. The reference position P0 is acquired from an external device. The external device includes, for example, a microcomputer, a CPU, an MPU, a GPU, a DSP, an FPGA, or an ASIC and the GPS module 21. A function of the external device may be configured only by hardware, or may be realized by combining hardware and software. The information indicating the reference position P0 output from the external device may change based on the number of occupants, a change in load, and a change in posture due to a decrease in gasoline, or the like. Therefore, for example, the reference position P0 acquired from the external device may be different from an initial position that is acquired initially. Therefore, the display processing device 30 may change the reference position P0 acquired from the external device based on the number of occupants, the change in the load, and the variation in the posture due to the decrease in gasoline and the like. Note that the display processing device 30 may set the reference position P0 based on the position information, the outside-vehicle information, the map data, and the like. The display processing device 30 may set the size of the virtual image Iv based on the position information and the outside-vehicle information.

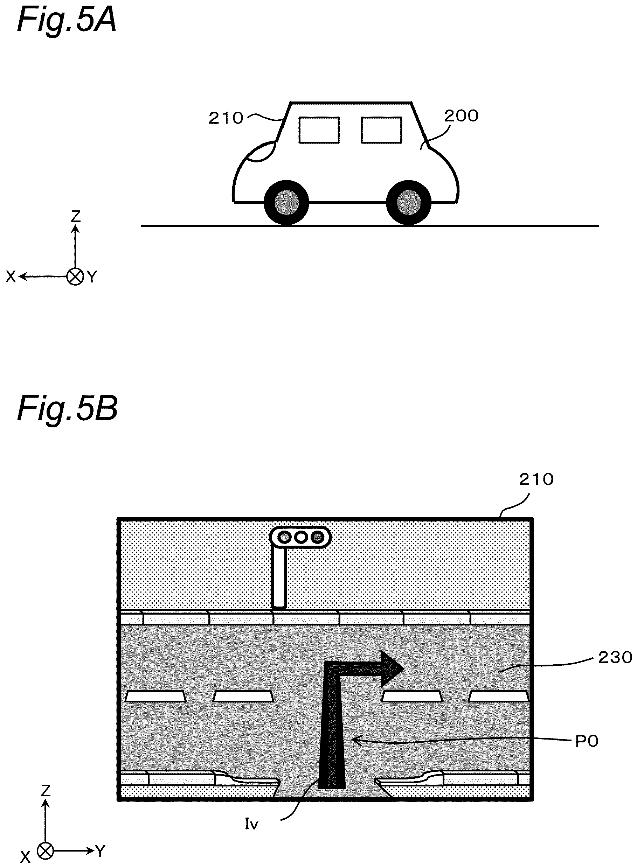

FIG. 5A shows the vehicle 200 not leaning. FIG. 5B shows a display example of the virtual image Iv when the vehicle 200 is not leaning. FIG. 5B shows a state in which the virtual image Iv shown in FIG. 4 is displayed in a manner superimposed on the actual view shown in FIG. 3. When the vehicle 200 is not leaning, if the virtual image Iv is displayed at the reference position P0 as shown in FIG. 5B, the virtual image Iv appears at a desired position to display, for example, the center of a cruising lane.

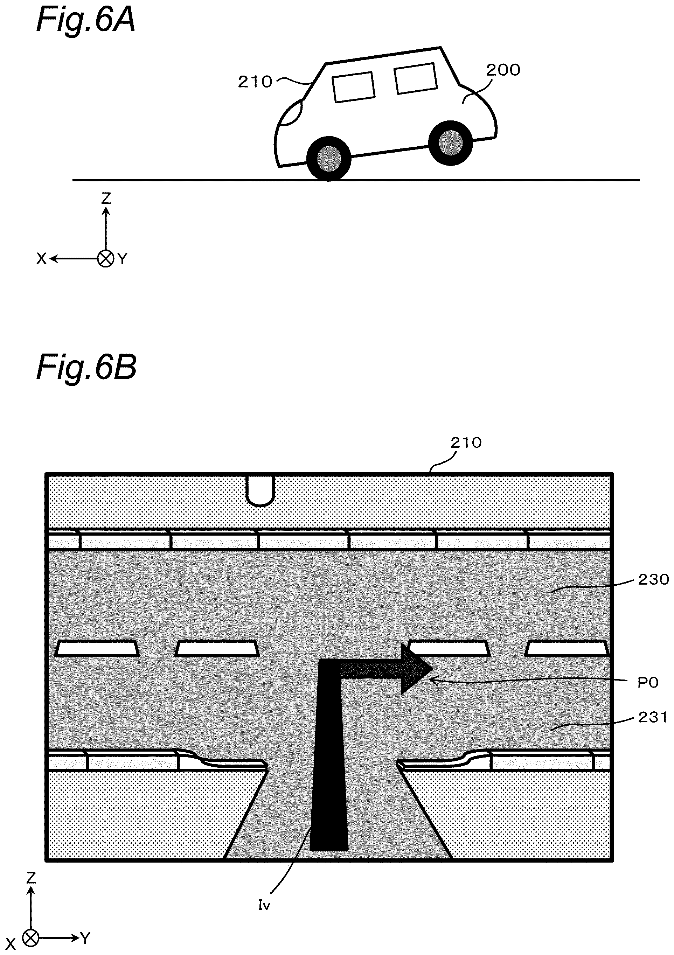

FIG. 6A shows the vehicle 200 in a forward leaning posture. FIG. 6B shows a display example of the virtual image Iv when the vehicle 200 is in the forward leaning posture. FIG. 6B illustrates a case where the display position of the virtual image Iv is displaced from the display target 230 according to the posture variation of the vehicle 200. The vehicle 200 may lean due to unevenness of the road surface, sudden acceleration or deceleration of the vehicle 200, or the like. For example, when the vehicle 200 suddenly decelerates, the vehicle 200 takes a forward leaning posture as shown in FIG. 6A. In this case, as shown in FIG. 6B, the position of display target 230 seen from windshield 210 changes according to the inclination of vehicle 200. For this reason, in a case where the virtual image Iv is displayed at the reference position P0, the virtual image Iv is displaced from the display target 230. For example, as shown in FIG. 6B, the tip of the arrow is in an opposite lane 231. Therefore, the projection system 100 adjusts the display position of the virtual image Iv in the direction of eliminating the displacement according to the posture of the vehicle 200.

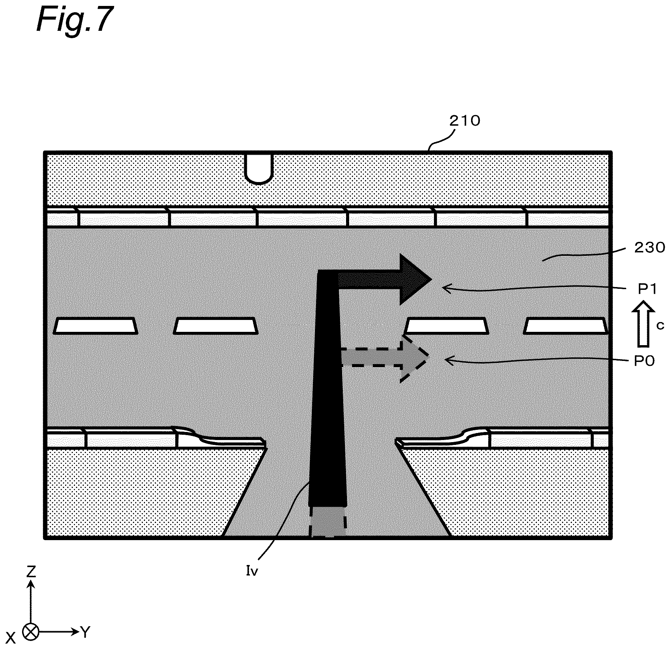

FIG. 7 shows the display position of the virtual image Iv before and after correction. The correction processing device 50 calculates a correction amount c so that the display position of the virtual image Iv is a position P1 where there is no displacement due to the angle of the vehicle 200. That is, the display processing device 30 sets the display position of the virtual image Iv to "reference position P0 + correction amount c". In this manner, the projection device 10 can display the virtual image Iv at the position P1 where it is desirable to be displayed with respect to the display target 230. As described above, even in a case where the vehicle 200 leans, the display position of the virtual image Iv is changed from the reference position P0 based on the correction amount c, so that the virtual image Iv can be displayed at the position P1 where it is desirable to be displayed with respect to the display target 230 in the actual view.

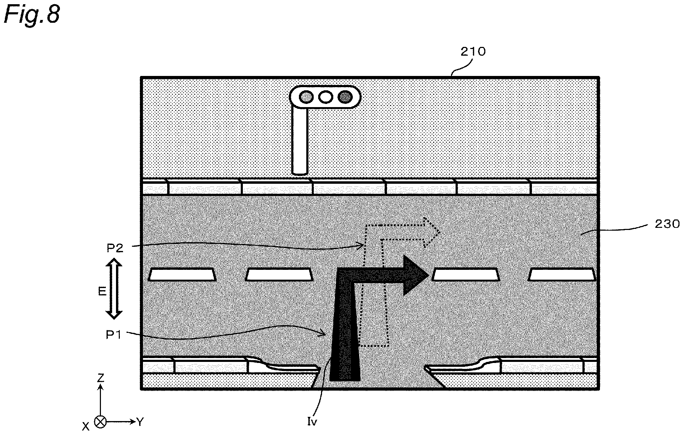

FIG. 8 illustrates a case where the display position of the virtual image Iv is displaced from the display target 230 due to noise of the gyro sensor 41. As described above, for example, the angular velocity detected by the gyro sensor 41 includes an error due to drift. Therefore, if the correction amount c is calculated based on the integral calculation of the angular velocity, the correction amount c contains an error. In this case, for example, even in a case where the vehicle 200 is stopped and there is almost no vibration, the posture variation of the vehicle 200 is detected and the correction amount c does not become zero. For this reason, even when the vehicle 200 is stopped, the display position (= reference position P0 + correction amount c) of the virtual image Iv changes, and may move away from, for example, the position P2 where it is desirable to be displayed. In the present embodiment, in order to reduce a position displacement E caused by the noise of the sensor, the correction amount is held at a value immediately before the vehicle speed becomes equal to or less than the first threshold when the vehicle speed is equal to or less than the first threshold, as described later. In this manner, it is possible to prevent the display position of the virtual image Iv from changing in a direction moving away from the position P2 where it displays the image while the speed of the vehicle 200 is equal to or less than the first threshold, for example, when the vehicle 200 is stopped. Further, while the speed of the vehicle 200 is equal to or less than the first threshold, it is possible to suppress the accumulation of correction errors due to the drift of the gyro sensor 41.

### 3. Operation of display processing device

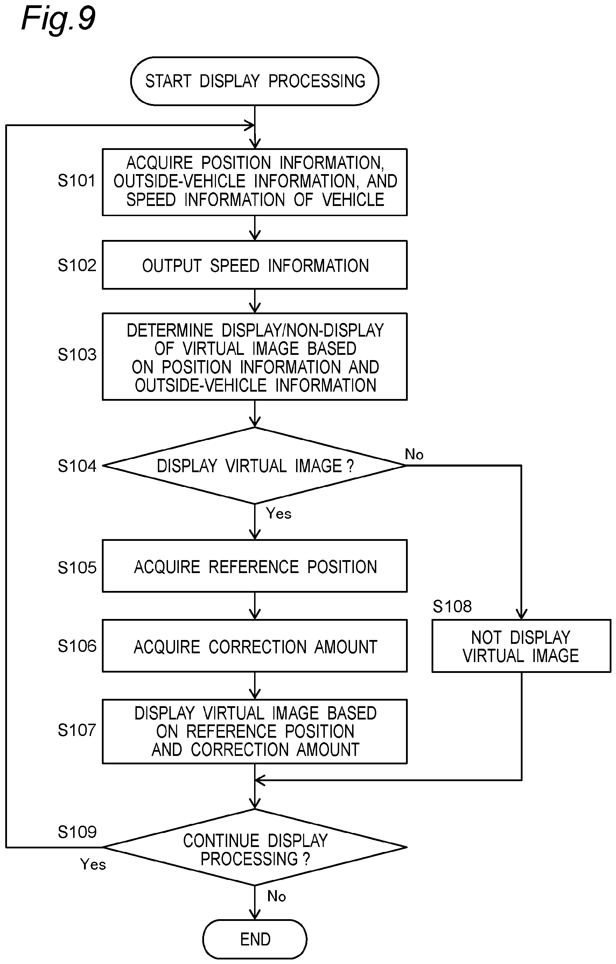

The operation of the display controller 32 of the display processing device 30 will be described with reference to FIG. 9. FIG. 9 shows the display processing performed by the display controller 32 of the display processing device 30. The display processing shown in FIG. 9 is started, for example, when the engine of the vehicle 200 is started or when a button for instructing the start of displaying the virtual image Iv is operated.

The display controller 32 acquires the position information, the outside-vehicle information, and the speed information of the vehicle 200 from the information acquisition device 20 (S101). The display controller 32 outputs the speed information to the correction processing device 50 (S102). The display controller 32 determines whether or not to display the virtual image Iv corresponding to the display target based on the position information and the outside-vehicle information (S103).

In a case of determining to display the virtual image Iv (Yes in S104), the display controller 32 acquires information indicating the reference position P0 of the virtual image Iv from an external device (S105). The display controller 32 acquires information indicating the correction amount c of the display position output from the correction processing device 50 (S106). The display controller 32 causes the projection device 10 to display the virtual image Iv based on the reference position P0 and the correction amount c (S107). For example, the display controller 32 reads the image data 33i of the virtual image Iv corresponding to the display target from the storage 33, sets the display position of the virtual image Iv to "reference position P0 + correction amount c", and outputs the display position to the projection device 10.

In a case of determining not to display the virtual image Iv (No in S104), the display controller 32 hides the virtual image Iv (S108).

The display controller 32 determines whether or not to continue the display processing (S109). For example, the display controller 32 ends the display processing in a case where the display processing is stopped (No in S109) when the engine of the vehicle 200 is stopped or when a button for giving an instruction to end the display of the virtual image Iv is operated. In a case where the display processing is continued (Yes in S109), the processing returns to Step S101.

### 4. Operation of correction processing device

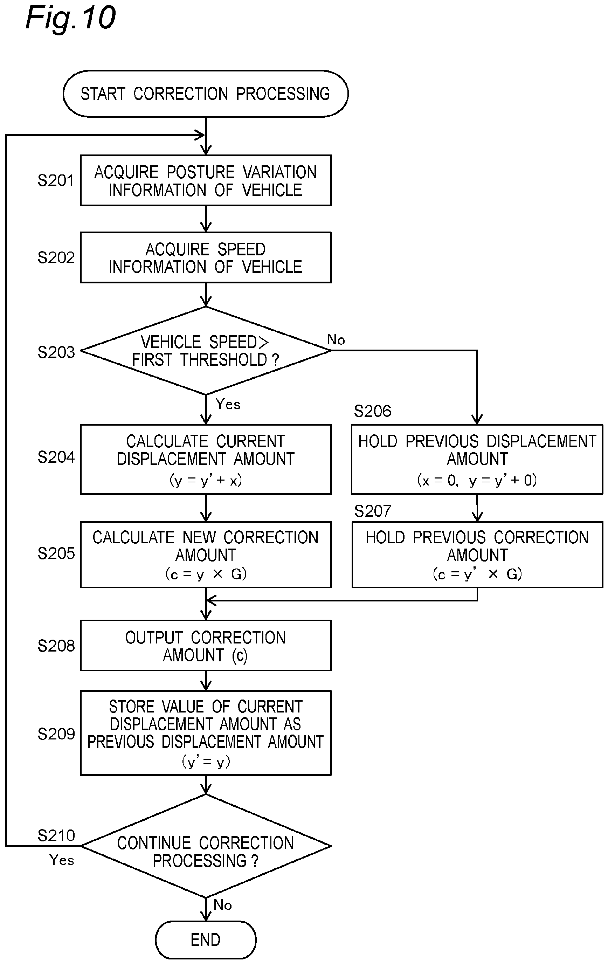

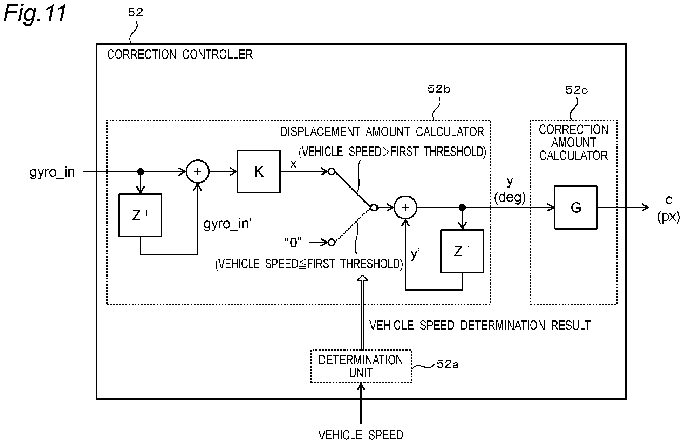

The operation of the correction controller 52 of the correction processing device 50 according to the first embodiment will be described with reference to FIGS. 10 and 11. FIG. 10 shows the correction processing performed by the correction controller 52 of the correction processing device 50. FIG. 11 shows a functional configuration of the correction controller 52.

The correction processing shown in FIG. 10 is started, for example, when the engine of the vehicle 200 is started or when a button for instructing the start of displaying the virtual image Iv is operated. The correction processing of FIG. 10 is started, for example, together with the display processing of FIG. 9. Note that the correction processing shown in FIG. 10 may be started when the button for instructing the start of the position correction of the virtual image Iv is operated.

The correction controller 52 acquires the posture variation information indicating the angular velocity of the vehicle 200 output from the gyro sensor 41 (S201). The correction controller 52 acquires the speed information indicating the vehicle speed from the display processing device 30 (S202). The determination unit 52a determines whether or not the vehicle speed is larger than the first threshold (S203).

When the determination unit 52a determines that the vehicle speed is larger than the first threshold (Yes in S203), the displacement amount calculator 52b calculates the posture of the vehicle 200, that is, a displacement amount around the three axes based on the posture variation information (S204). For example, as shown in FIG. 11, the displacement amount calculator 52b calculates a current displacement amount y from "y = y' + x". The displacement amount y is an angle with respect to the three axes. In FIG. 11, y' is a previous displacement amount, and x is a calculated value in an integration calculation process. The calculated value x is calculated from "x = (gyro_in + gyro_in') × K". K is a filter coefficient. gyro_in is the angular velocity acquired in Step S201, and gyro_in' is a previous angular velocity.

The correction amount calculator 52c calculates the new correction amount c of the display position of the virtual image Iv based on the current displacement amount y (S205). For example, as shown in FIG. 11, the correction amount calculator 52c calculates the new correction amount c from "c = y × G". Here, the coefficient G is a conversion coefficient for converting an angle into the number of pixels. Specifically, for example, the correction amount calculator 52c converts the displacement amount, which is the angle of the vehicle 200, into the number of pixels for the pitch angle and the yaw angle, and determines the correction amount c that cancels the displacement amount indicated by the number of pixels. For the roll angle, the correction amount c that cancels the displacement amount is determined as an angle.

In a case where the determination unit 52a determines that the vehicle speed is equal to or less than the first threshold (No in S203), the displacement amount calculator 52b holds the previous displacement amount (S206). For example, in FIG. 11, the displacement amount calculator 52b sets x = 0 and holds the value of the previous displacement amount y' from "y = y' + 0".

The correction amount calculator 52c holds the previous correction amount (S207). For example, in Step S206, the value of the previous displacement amount y' is held as the current displacement amount y due to x = 0. For this reason, the new correction amount c calculated from "c = y × G", has the same value as the correction amount "y' × G".

The correction amount calculator 52c outputs the correction amount c calculated in Step S205 or the correction amount c held in Step S207 to the display processing device 30 (S208). In this manner, the virtual image Iv is displayed at the position indicated by "P0 + c" based on the reference position P0 and the correction amount c in Step S107 of FIG. 9.

The displacement amount calculator 52b stores the value of the current displacement amount as the previous displacement amount (S209). That is, the displacement amount y calculated in Step S204 or the displacement amount y held in Step S206 is stored as the previous displacement amount y'.

The correction controller 52 determines whether or not to continue the correction processing (S210). For example, the correction controller 52 ends the correction processing in a case where the correction processing is stopped (No in S210) such as when the engine of the vehicle 200 is stopped or when a button for providing an instruction to end the display of the virtual image Iv is operated. In a case where the correction processing is continued (Yes in S210), the processing returns to Step S201. After the processing returns to Step S201, the value of the previous displacement amount y' stored in previous Step S209 is used in next Step S204 or Step S206.

As described above, in the present embodiment, when the vehicle speed is equal to or less than the first threshold, the correction amount c is calculated based on the value of the previous displacement amount y'. That is, the value of the correction amount c immediately before the vehicle speed becomes equal to or less than the first threshold is held. Therefore, it is possible to suppress the accumulation of correction errors due to the drift of the gyro sensor 41. When the vehicle speed is equal to or less than the first threshold, the value of the previous correction amount is held, and therefore the display position of the virtual image Iv displayed in Step S107 of FIG. 9 does not change based on the correction amount.

### 5. Effect, supplement, and the like

The projection system 100 of the present disclosure displays a virtual image in front of the windshield 210 of the vehicle 200. The projection system 100 includes the projection device 10, the information acquisition device 20, the posture detection device 40, the display processing device 30, and the correction processing device 50. The projection device 10 projects light representing a virtual image on the windshield 210. The information acquisition device 20 acquires speed information indicating the speed of the vehicle. The posture detection device 40 detects a posture variation of the vehicle. The display processing device 30 controls the display position of the virtual image based on the reference position P0 and the correction amount c. The correction processing device 50 sets the correction amount c based on the posture variation of the vehicle.

The correction processing device 50 determines whether or not the speed of the vehicle 200 is equal to or less than the first threshold based on the speed information. When determining that the speed of the vehicle 200 is equal to or less than the first threshold, the correction processing device 50 adjusts the correction amount c to a value equal to or less than the correction amount immediately before the speed of the vehicle 200 becomes equal to or less than the first threshold. Specifically, the correction processing device 50 holds the correction amount at the value of the correction amount immediately before the speed of the vehicle becomes equal to or less than the first threshold while determining that the speed of the vehicle 200 is equal to or less than the first threshold (S206 and S207). In this manner, while the speed of the vehicle is equal to or less than the first threshold, it is possible to suppress the accumulation of correction errors due to the drift of the gyro sensor 41. Therefore, it is possible to suppress the position displacement of the virtual image with high accuracy.

### (Second embodiment)

In the first embodiment, the correction amount when the vehicle speed is equal to or less than the first threshold is held at a value immediately before the vehicle speed becomes equal to or less than the first threshold. In the present embodiment, the correction amount when the vehicle speed is equal to or less than the first threshold is held at zero. In this manner, the display position of the virtual image Iv is returned to the reference position.

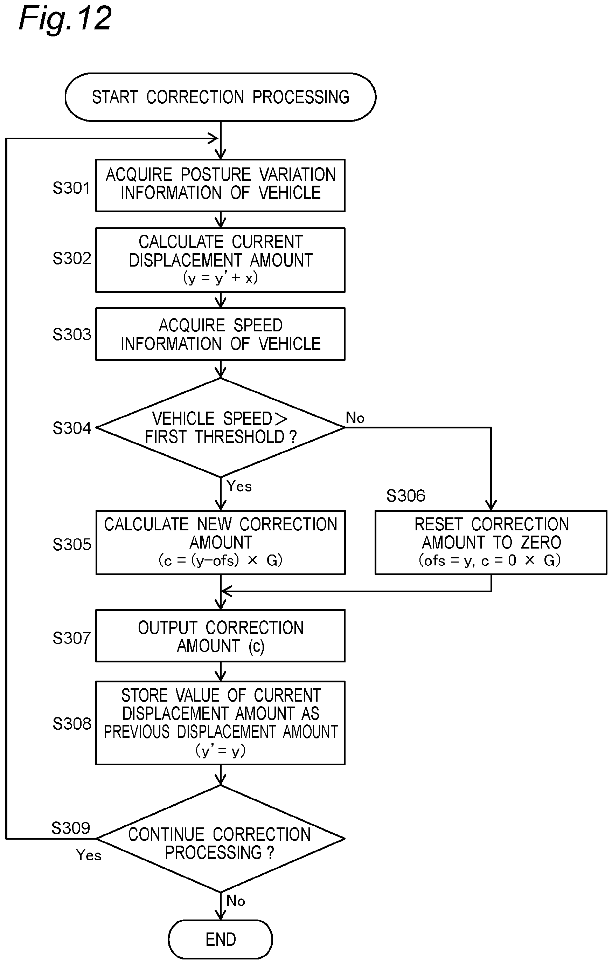

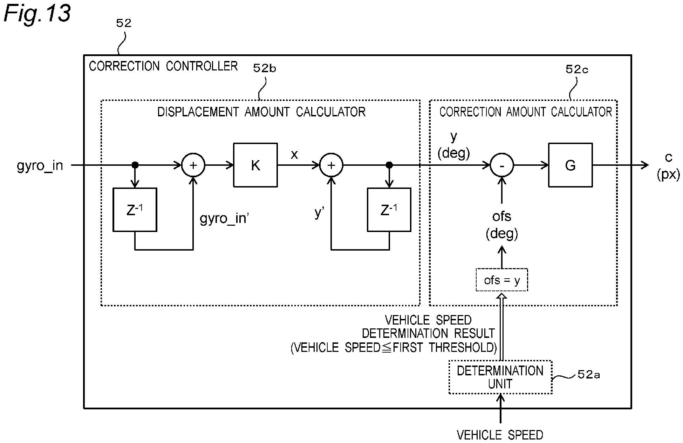

The operation of the correction controller 52 of the correction processing device 50 according to a second embodiment will be described with reference to FIGS. 12 and 13. FIG. 12 shows correction processing performed by the correction controller 52 of the correction processing device 50 in the second embodiment. Steps S301, S302, S303, and S304 of FIG. 12 are the same as Steps S201, S204, S202, and S203 of FIG. 10 of the first embodiment respectively. Further, Steps S307 to S309 of FIG. 12 are the same as Steps S208 to S210 of FIG. 10 of the first embodiment respectively. FIG. 13 shows the functional configuration of the correction controller 52 in the second embodiment.

The correction controller 52 acquires the posture variation information indicating the angular velocity of the vehicle 200 output from the gyro sensor 41 (S301). The displacement amount calculator 52b calculates the current displacement amount y based on the posture variation information (S302). For example, as shown in FIG. 13, the displacement amount calculator 52b calculates the current displacement amount y from "y = y' + x".

The correction controller 52 acquires the speed information indicating the vehicle speed from the display processing device 30 (S303). The determination unit 52a determines whether or not the vehicle speed is larger than the first threshold (S304).

In a case where the determination unit 52a determines that the vehicle speed is larger than the first threshold (Yes in S304), the correction amount calculator 52c calculates the new correction amount c of the display position of the virtual image Iv based on the current displacement amount y (S305). For example, as shown in FIG. 13, the correction amount calculator 52c calculates the new correction amount c from "c = (y - ofs) × G". The offset value ofs is an angle corresponding to the displacement amount y when the vehicle speed is equal to or less than the first threshold. The offset value ofs is set in Step S306 described later. An initial value of the offset value ofs is, for example, zero.

In a case where the determination unit 52a determines that the vehicle speed is equal to or less than the first threshold (No in S304), the correction controller 52 resets the correction amount c to zero (S306). Specifically, for example, as shown in FIG. 13, the correction amount calculator 52c sets the offset value ofs to the current displacement amount y (ofs = y). In this manner, the calculation of the correction amount c, "c = (y - ofs) × G", in the correction amount calculator 52c becomes "c = 0 × G" from "ofs = y". Therefore, the correction amount c calculated by the correction amount calculator 52c becomes zero.

The correction amount calculator 52c outputs the correction amount c calculated in Step S305 or the correction amount c calculated in Step S306 to the display processing device 30 (S307).

The displacement amount calculator 52b stores the value of the current displacement amount y as the previous displacement amount y' (S308).

The correction controller 52 determines whether or not to continue the correction processing (S309). In a case where the correction processing is continued (Yes in S309), the processing returns to Step S301. In a case where the correction processing is not continued (No in S309), the processing shown in FIG. 12 is finished.

The angular velocity detected by the gyro sensor 41 includes an error due to drift. Therefore, if the calculation of the correction amount based on the integral calculation of the angular velocity is continued, the error included in the correction amount is accumulated and becomes large. In this case, for example, even when the vehicle 200 is stopped and does not actually lean, it is detected that the vehicle 200 leans, and the correction amount c does not become zero. For this reason, even when the vehicle 200 is stopped, the display position (= reference position P0 + correction amount c) of the virtual image Iv may move away from the display target. For example, as shown in FIG. 8, the actually displayed position P1 (= reference position P0 + correction amount c) does not become the position P2 where the virtual image Iv is to be displayed with respect to the display target 230. However, in the present embodiment, the correction amount c is reset to zero when the speed of the vehicle 200 is equal to or less than the first threshold. Specifically, the displacement amount y when the vehicle speed is equal to or less than the first threshold is set to the offset value ofs. In this manner, the display position of the virtual image Iv is reset to the reference position P0 when the vehicle speed is equal to or less than the first threshold. Therefore, the accumulated correction error can be eliminated when the vehicle speed is equal to or less than the first threshold. In this manner, the display position of the virtual image Iv can be returned to the position where it is desirable to be displayed.

The correction amount c when the vehicle speed is larger than the first threshold is calculated from "c = (y - ofs) × G". By setting the offset value ofs to the displacement amount when the vehicle speed is equal to or less than the first threshold, the accumulation of the correction error due to the noise of the gyro sensor 41 after that is suppressed.

As described above, by resetting the correction amount c to zero, it is possible to eliminate the displacement of the display position due to the accumulation of noise of the gyro sensor 41 used to detect the vehicle posture. Further, since the correction amount is reset every time the vehicle speed becomes equal to or less than the first threshold, the chance of resetting the correction amount increases. Therefore, it is possible to suppress the accumulation of detection errors of the vehicle posture and to detect the vehicle posture with high accuracy.

Note that, although the offset value is an angle in the present embodiment, the offset value may be the number of pixels. In this case, when the vehicle speed is equal to or less than the first threshold, the correction amount calculator 52c converts the displacement amount y into the number of pixels, and then sets "offset value represented by number of pixels = number of pixels corresponding to current displacement amount". Even in this case, the correction amount c is reset to zero when the vehicle speed is equal to or less than the first threshold, and therefore the display position is returned to the reference position P0.

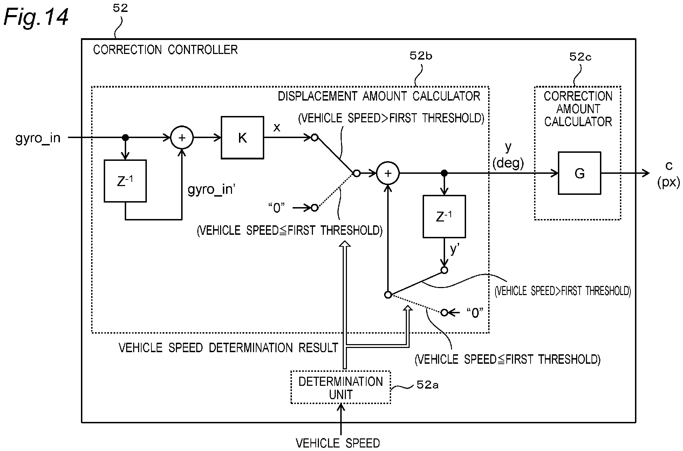

Note that although the correction amount is reset to zero by setting the offset value ofs to "ofs = y" in the present embodiment, the method of setting the correction amount c to zero is optional. For example, as shown in FIG. 14, the displacement amount calculator 52b may switch whether to output the current displacement amount y or zero based on whether or not the vehicle speed is larger than the first threshold. Specifically, when the vehicle speed is larger than the first threshold, the displacement amount calculator 52b calculates and outputs the current displacement amount y from "y = y' + x". When the vehicle speed is equal to or less than the first threshold, the displacement amount calculator 52b switches both x and y' to 0 and outputs "y = 0". When the vehicle speed is equal to or less than the first threshold, "x = 0" and "y' = 0" are set, so that an integration filter in the displacement amount calculator 52b is reset. In this manner, the accumulation of the error of the integral calculation in the displacement amount calculator 52b is eliminated. In FIG. 14, the correction amount calculator 52c calculates the new correction amount c from "c = y × G". When the vehicle speed is equal to or less than the first threshold, the displacement amount calculator 52b outputs the displacement amount y of zero, so that the correction amount calculator 52c calculates "c = 0 × G". In this manner, the correction amount c is reset to zero.

Note that although the correction amount c is changed by the offset value ofs in the present embodiment, the reference position P0 may be changed by the offset value ofs. In this case, the correction controller 52 may output the correction amount c calculated from "c = y × G" and the offset value ofs set in Step S306 to the display processing device 30 in Step S307. The display controller 32 of the display processing device 30 acquires the offset value ofs from the correction processing device 50 together with the correction amount c in Step S106 of FIG. 9. The display controller 32 sets a new reference position P0' from "P0' = P0 + ofs". The display controller 32 sets the display position of the virtual image Iv to "new reference position P0' + correction amount c" and causes the projection device 10 to display the virtual image Iv.

### (Third embodiment)

In the second embodiment, the correction controller 52 resets the correction amount c to zero when the vehicle speed is equal to or less than the first threshold. In the present embodiment, the correction controller 52 reduces the magnitude of the correction amount c by a certain amount at a time when the vehicle speed is equal to or less than the first threshold. Note that, in the first embodiment, since the displacement amount and the correction amount immediately before the vehicle speed becomes equal to or less than the first threshold are held, it is possible to prevent the error from being accumulated after the holding. However, the error before holding remains included. Further, in the second embodiment, the correction amount is reset to zero when the vehicle speed becomes equal to or less than the first threshold. Accordingly, although the accumulated error is eliminated, appearance is significantly changed.

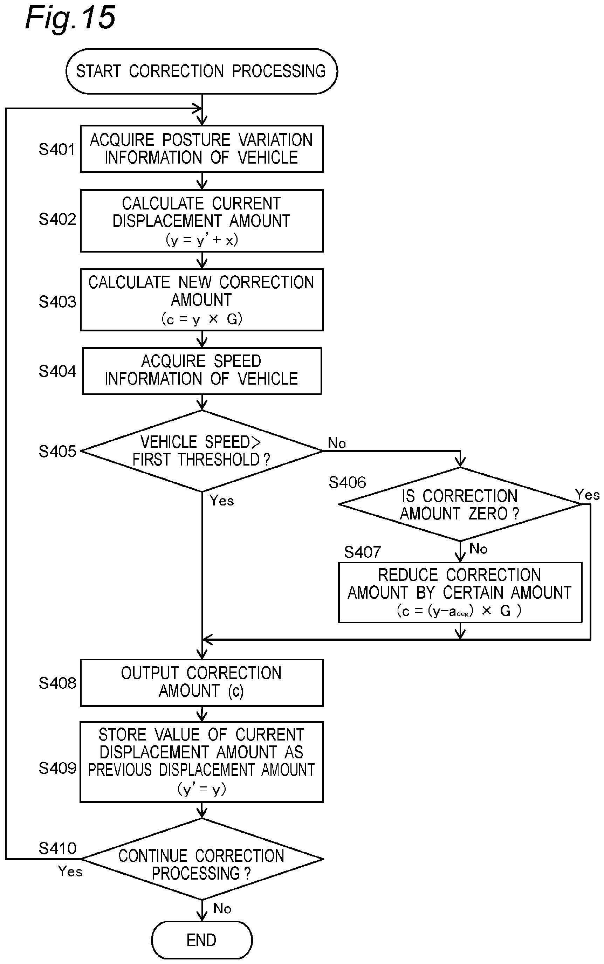

FIG. 15 shows the correction processing in a third embodiment. Steps S401, S402, S403, S404, and S405 of FIG. 15 of the third embodiment are the same as Steps S201, S204, S205, S202, and S203 of FIG. 10 of the first embodiment, respectively. Further, Steps S408 to S410 of FIG. 15 of the third embodiment are the same as Steps S208 to S210 of FIG. 10 of the first embodiment, respectively. Further, Steps S401, S402, S404, and S405 of FIG. 15 of the third embodiment are the same as Steps S301, S302, S303, and S304 of FIG. 12 of the second embodiment, respectively. Further, Steps S408 to S410 of FIG. 15 of the third embodiment are the same as Steps S307 to S309 of FIG. 12 of the second embodiment, respectively.

The correction controller 52 acquires the posture variation information indicating the angular velocity of the vehicle 200 output from the gyro sensor 41 (S401). The displacement amount calculator 52b calculates the current displacement amount y based on the posture variation information (S402). The correction amount calculator 52c calculates the new correction amount c of the display position of the virtual image Iv based on the current displacement amount y (S403). For example, the correction amount calculator 52c calculates the new correction amount c from "c = y × G".

The correction controller 52 acquires the speed information indicating the vehicle speed from the display processing device 30 (S404). The determination unit 52a determines whether or not the vehicle speed is larger than the first threshold (S405).

In a case where the determination unit 52a determines that the vehicle speed is larger than the first threshold (Yes in S405), the correction amount calculator 52c outputs the correction amount calculated in Step S403 (S408).

In a case where the determination unit 52a determines that the vehicle speed is equal to or less than the first threshold (No in S405), the correction amount calculator 52c determines whether or not the correction amount c calculated in Step S403 is zero (S406). Note that the determination unit 52a may determine whether or not the correction amount c is zero. Further, the reference value for determining the correction amount c does not need to be zero. For example, the correction amount c in the range of -Δc ≤c ≤ Δc including noise may be treated as zero. If the correction amount c is not zero (No in Step S406), the correction amount calculator 52c reduces the magnitude of the correction amount c by a certain amount (S407). For example, the correction amount calculator 52c subtracts a certain amount aₚₓ from the correction amount c calculated in Step S403. In another example, a certain amount a_{deg} may be subtracted from the displacement amount y calculated by the displacement amount calculator 52b in Step S402, and "y - a_{deg}" may be output to the correction amount calculator 52c, and the correction amount calculator 52c may recalculate the correction amount c from "c = (y - a_{deg}) × G". In yet another example, the correction amount calculator 52c may set the offset value ofs in "c = (y - ofs) × G" shown in FIG. 13 to the certain amount a_{deg}. The correction amount c is preferably set to be reduced by a certain amount while the vehicle speed is equal to or less than the first threshold. The certain amount aₚₓ or the certain amount a_{deg} may be set according to the display position of the virtual image Iv in the display area 220. Note that the certain amount aₚₓ or the certain amount a_{deg} for subtraction may be changed according to the vehicle speed of the vehicle 200. For example, the certain amount aₚₓ or the certain amount a_{deg} may be increased as the vehicle speed decreases. In this case, the correction amount c becomes smaller as the vehicle speed becomes smaller. The correction amount c calculated in Step S407 is set to a value equal to or less than the value immediately before the vehicle speed becomes equal to or less than the first threshold. If the correction amount c is zero (Yes in Step S406), the processing proceeds to Step S408 without executing Step S407.

The correction amount calculator 52c outputs the correction amount c calculated in Step S403 or the correction amount c calculated in Step S407 to the display processing device 30 (S408). The displacement amount calculator 52b stores the value of the current displacement amount y as the previous displacement amount y' (S409). The correction controller 52 determines whether or not to continue the correction processing (S410). In a case where the correction processing is continued (Yes in S410), the processing returns to Step S401. In a case where the correction processing is not continued (No in S410), the processing shown in FIG. 15 is finished.

As described above, the correction processing device 50 calculates the correction amount c for each sampling cycle of the correction processing, and reduces the calculated correction amount c by a certain amount when the vehicle speed is equal to or less than the first threshold. By reducing the correction amount by a certain amount while updating the correction amount, the correction amount can be reset when, for example, the vehicle finally stops, and the position of the virtual image Iv gradually returns to the reference position P0. Since the position of the virtual image Iv does not suddenly change significantly, it is possible to prevent the occupant D from feeling uncomfortable with the change in the display position of the virtual image Iv. That is, it is possible to suppress a feeling of uncomfortableness due to the shift of the display position. Furthermore, the accumulated error caused by the noise of the gyro sensor 41 can be eliminated.

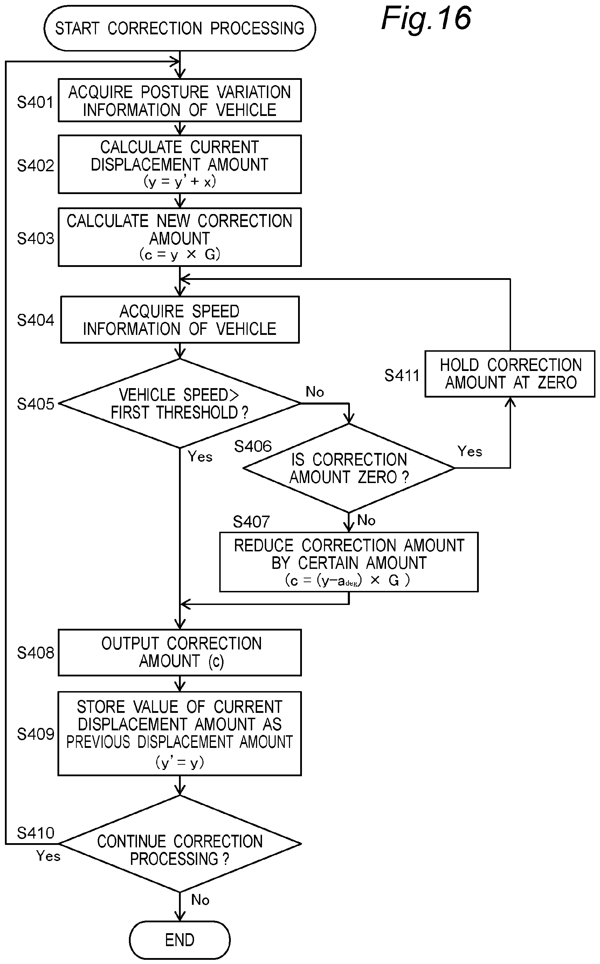

FIG. 16 shows a first variation of the third embodiment. In the correction processing of the third embodiment in FIG. 15, in a case where the correction amount calculator 52c determines that the correction amount c is zero in Step S406 (Yes in S406), the correction amount calculator 52c outputs the correction amount c of zero (S408). On the other hand, in the correction processing of the first variation of the third embodiment in FIG. 16, in a case where the correction amount calculator 52c determines that the correction amount c is zero in Step S406 (Yes in S406), the correction amount calculator 52c holds the correction amount c at zero (S411). Next, the processing returns to Step S404, and the correction controller 52 acquires the speed information indicating the vehicle speed from the display processing device 30. When the processing proceeds to Steps S405 and S406 again, in a case where the vehicle speed is equal to or less than the first threshold, the correction amount c is continuously held at zero.

In the third embodiment, since the calculation of the correction amount c is continued for each cycle of the correction processing even after the vehicle speed becomes equal to or less than the first threshold, the correction amount c is reduced by a certain amount. However, there is a little influence of the drift of the gyro sensor 41. In the first variation of the third embodiment, the correction amount c is held at zero at a timing at which the correction amount c once becomes zero, so that a sudden change in the display position of the virtual image Iv at the time of zero reset is not visually recognized. Accordingly, the influence of the drift of the gyro sensor 41 can be completely eliminated.

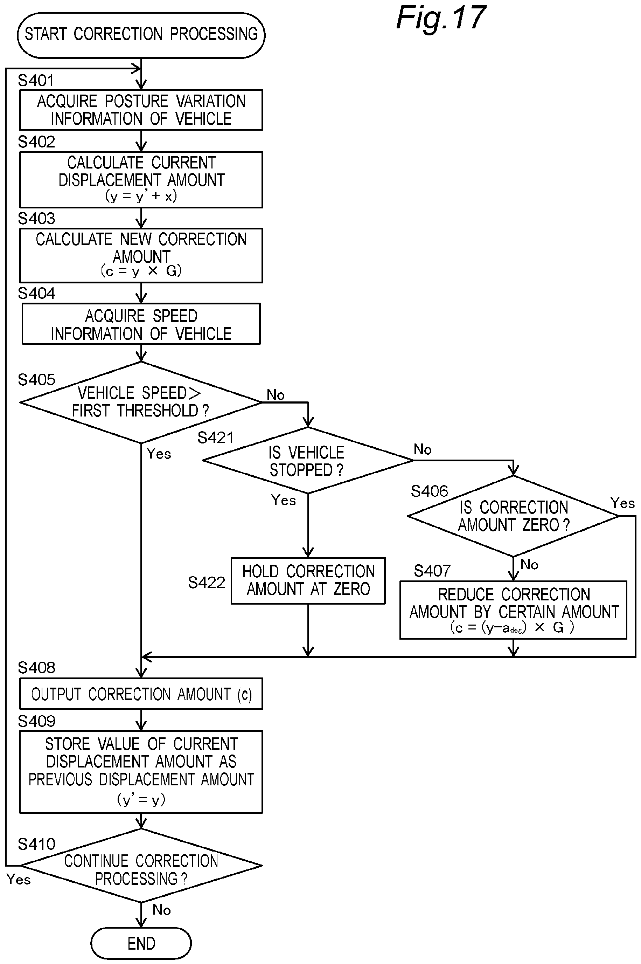

FIG. 17 shows a second variation of the third embodiment. In the correction processing of the third embodiment in FIG. 15, in a case where the determination unit 52a determines that the vehicle speed is equal to or less than the first threshold (No in S405), the correction amount calculator 52c determines whether or not the correction amount c is zero (S406). On the other hand, in the correction processing of the second variation of the third embodiment in FIG. 17, in a case where the determination unit 52a determines that the vehicle speed is equal to or less than the first threshold (No in S405), the determination unit 52a determines whether or not the vehicle is stopped. The determination unit 52a determines that the vehicle is stopped, for example, in a case where the vehicle speed is zero or in a case where the vehicle speed is equal to or less than a predetermined threshold. When the determination unit 52a determines that the vehicle is not stopped (No in S421), the processing proceeds to Step S406. When the determination unit 52a determines that the vehicle is stopped (Yes in S421), the correction amount calculator 52c holds the correction amount c at zero (S422). The correction amount calculator 52c outputs the correction amount c of zero (S408). The subsequent processing is similar to that of the correction processing shown in FIG. 15.

In the first variation of the third embodiment, once the correction amount c becomes zero, the amount is held at zero after that. There is no problem in a case where the vehicle 200 stops and the vibration of the gyro sensor 41 disappears completely.

However, as an example in which the correction amount c becomes zero before the vehicle 200 stops, there is a case where the sign of a vibration angle is inverted (zero crossing) during the vibration of the gyro sensor 41. In this case, during a period after the correction amount is determined to be zero and held at zero until the vehicle 200 completely stops, the correction is not performed at all, which may cause visual discomfort. On the other hand, in the second variation of the third embodiment, in a case where the vehicle speed is equal to or less than the first threshold, determination as to whether or not the vehicle is stopped is further performed. Accordingly, the calculation of the correction amount is continued until the vehicle 200 is stopped, and in a case where the vehicle 200 is stopped, the correction amount c is held at zero. As described above, when the vehicle 200 is decelerating so as to be stopped, the correction amount c is reduced by a certain amount to perform the correction, and the correction amount c is held at zero when the vehicle 200 is stopped. In this manner, it is possible to eliminate the accumulated error and prevent display displacement due to noise of the drift or the like at the time the vehicle 200 is stopped without causing any visual discomfort.

### (Fourth embodiment)

When the vehicle speed is equal to or less than the first threshold, the correction amount c is held at a value immediately before the vehicle speed becomes equal to or less than the first threshold in the first embodiment, and the correction amount c is reset to zero in the second embodiment. In the present embodiment, depending on the magnitude of the correction amount c, whether to hold the correction amount c at the previous value or to set the correction amount c to zero is determined.

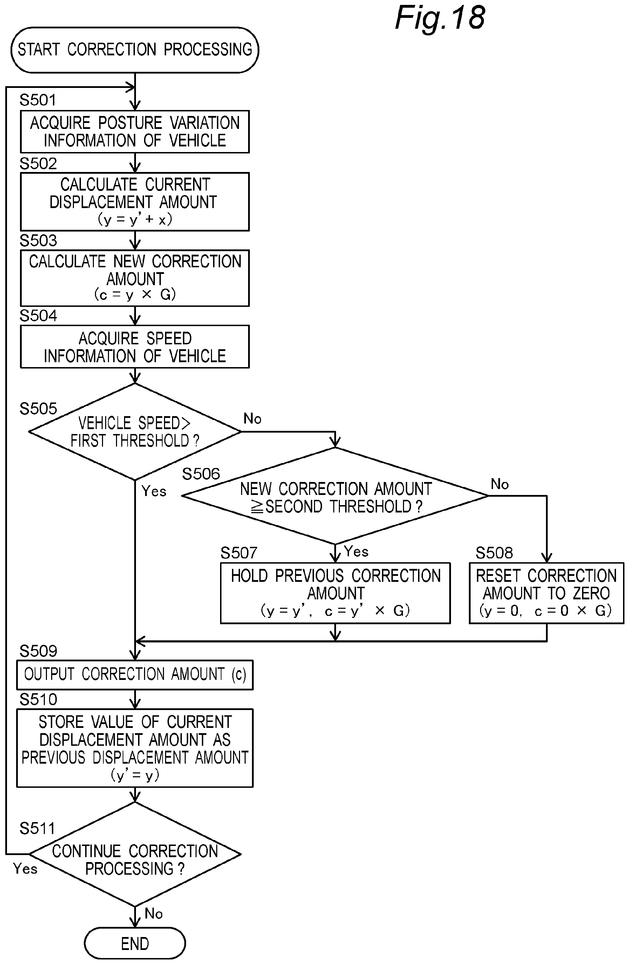

FIG. 18 shows the correction processing in a fourth embodiment. FIG. 18 of the fourth embodiment is a combination of FIG. 10 of the first embodiment and FIG. 12 of the second embodiment. For example, Step S507 of FIG. 18 of the fourth embodiment corresponds to Steps S206 and S207 of FIG. 10 of the first embodiment. Step S508 of FIG. 18 of the fourth embodiment is the same as Step S306 of FIG. 12 of the second embodiment.

In the present embodiment, when the vehicle speed is equal to or less than the first threshold (No in S505), the correction amount calculator 52c determines whether or not the new correction amount c based on the current displacement amount y calculated in Step S503 is equal to or more than a second threshold (S506). The determination unit 52a may make the determination in Step S506.

If the correction amount c is equal to or more than the second threshold (Yes in Step S506), the correction amount calculator 52c holds the previous correction amount c (S507). For example, as shown in FIG. 11, the displacement amount calculator 52b sets "x = 0" and outputs the previous displacement amount y' as the current displacement amount y. In this manner, the correction amount calculator 52c calculates "c = y' × G".

If the correction amount c is smaller than the second threshold (No in Step S506), the correction amount calculator 52c resets the correction amount c to zero (S508). For example, the displacement amount calculator 52b outputs the current displacement amount y as zero, and the correction amount calculator 52c calculates "c = 0 × G". In the calculation of "c = (y - ofs) × G", the correction amount calculator 52c may set "ofs = y" and calculate "c = 0 x G".

As described above, when the vehicle speed is equal to or less than the first threshold, the correction processing device 50 holds the correction amount c at a value immediately before the vehicle speed becomes equal to or less than the first threshold in a case where the correction amount c based on the current displacement amount is equal to or more than the second threshold, and resets the correction amount to zero in a case where the correction amount c based on the current displacement amount is smaller than the second threshold. In this manner, it is possible to perform the correction of the display position and the elimination of the accumulated error without causing any visual discomfort in accordance with the speed of the vehicle 200.

### (Fifth embodiment)

When the vehicle speed is equal to or less than the first threshold, the correction amount c is reset to zero in the second embodiment, and the magnitude of the correction amount c is reduced by a certain amount in the third embodiment. In the present embodiment, the correction amount is adjusted according to the magnitude of the correction amount c. Specifically, in a case where the correction amount c is equal to or more than the second threshold, the correction amount c is reduced by a certain amount, and when the correction amount c is less than the second threshold, the correction amount is reset to zero.

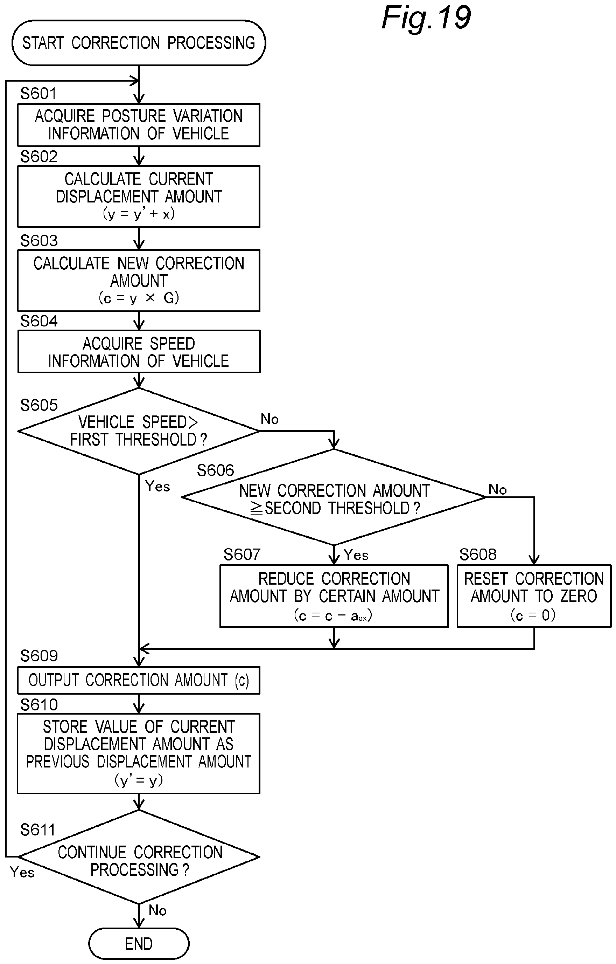

FIG. 19 shows the correction processing in a fifth embodiment. FIG. 19 of the fifth embodiment is a combination of FIG. 12 of the second embodiment and FIG. 15 of the third embodiment. For example, Step S607 of FIG. 19 of the fifth embodiment is the same as Step S407 of FIG. 15 of the third embodiment. Step S608 of FIG. 19 of the fourth embodiment is the same as Step S306 of FIG. 12 of the second embodiment.

In the present embodiment, in a case where the vehicle speed is equal to or less than the first threshold (No in S605), the correction amount calculator 52c determines whether or not the new correction amount c based on the current displacement amount y calculated in Step S603 is equal to or more than the second threshold (S606). The determination unit 52a may make the determination in Step S606.

If the correction amount c is equal to or more than the second threshold (Yes in Step S606), the correction amount calculator 52c reduces the correction amount c by a certain amount (S607). For example, the correction amount calculator 52c calculates "c = c - aₚₓ". Note that the correction amount calculator 52c may set the offset value ofs to the certain amount a_{deg} in the calculation of "c = (y - ofs) × G".

If the correction amount c is smaller than the second threshold (No in Step S606), the correction amount calculator 52c resets the correction amount c to zero (S608). For example, the displacement amount calculator 52b outputs "y = 0", and the correction amount calculator 52c calculates "c = 0 × G". Note that, as shown in FIG. 13, the displacement amount calculator 52b may output the displacement amount y, and the correction amount calculator 52c may calculate "c = (y - ofs) × G" from "ofs = y".

As described above, the correction processing device 50 calculates the correction amount c for each sampling cycle of the correction processing, and when the vehicle speed is equal to or less than the first threshold, the correction amount is reduced by a certain amount in a case where the calculated correction amount c is equal to or more than the second threshold, and the correction amount is reset to zero in a case where the correction amount c is smaller than the threshold. As described above, the correction amount is reduced by a certain amount while the correction amount c is updated, and when reduced to a certain degree, the correction amount c is reset to zero. In this manner, correction of the display position and elimination of the accumulated error can be performed according to the inclination of the vehicle 200 without causing any visual discomfort.

### (Sixth embodiment)

When the vehicle speed is equal to or less than the first threshold, the correction amount c is immediately reset to zero in the second embodiment. In the present embodiment, while the vehicle speed is equal to or less than the first threshold, the correction amount c is gradually reset to zero over a certain period of time.

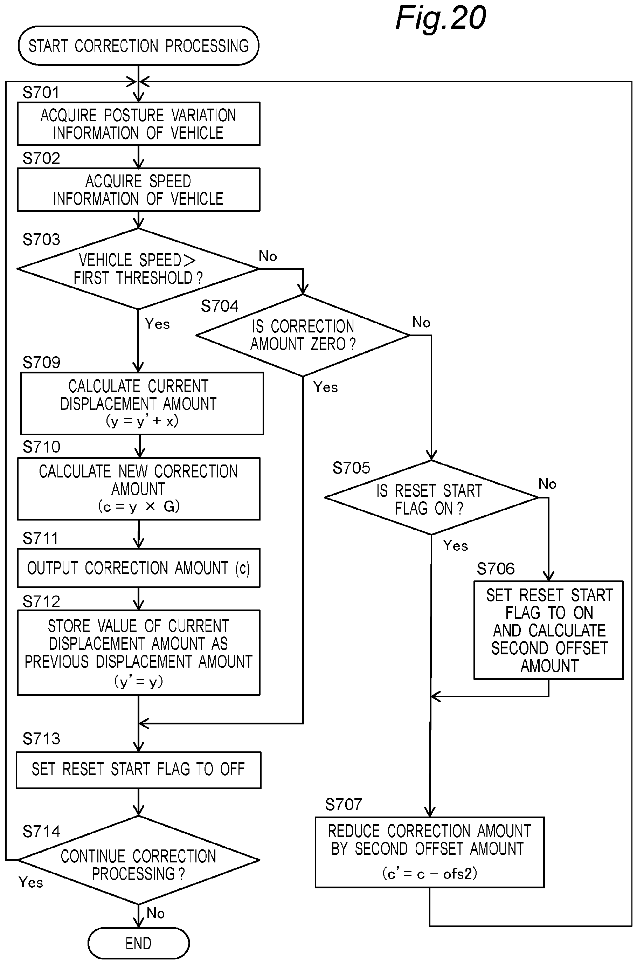

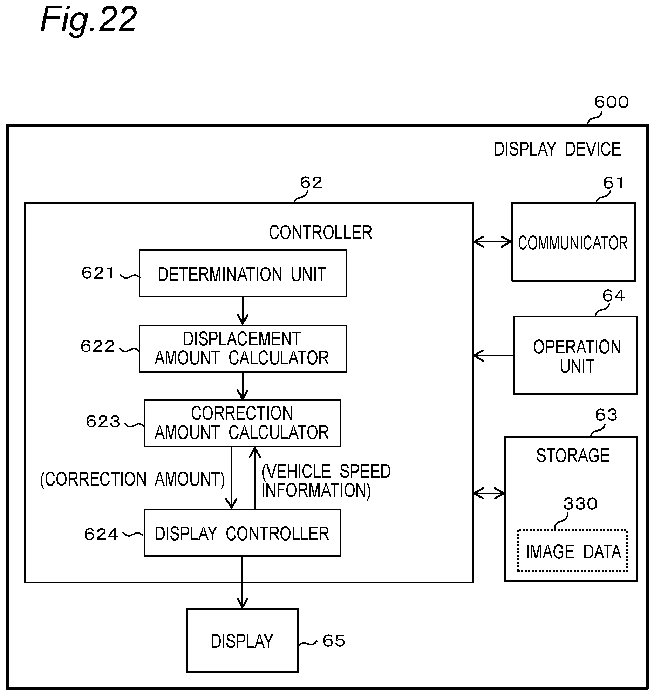

FIG. 20 shows the correction processing in a sixth embodiment. Steps S701 to S703, S709 to S712, and S714 of FIG. 22 of the sixth embodiment are the same as Steps S201 to S203, S204, S205, and S208 to S210 of FIG. 10 of the first embodiment, respectively.

The correction controller 52 acquires the posture variation information indicating the angular velocity of the vehicle 200 output from the gyro sensor 41 (S701). The correction controller 52 acquires the speed information indicating the vehicle speed from the display processing device 30 (S702). The determination unit 52a determines whether or not the vehicle speed is larger than the first threshold (S703).

In a case where the determination unit 52a determines that the vehicle speed is larger than the first threshold (Yes in S703), the displacement amount calculator 52b calculates the current displacement amount y based on the posture variation information (S709). The correction amount calculator 52c calculates the new correction amount c of the display position of the virtual image Iv based on the current displacement amount y (S710). For example, the correction amount calculator 52c calculates the new correction amount c from "c = y × G". The correction amount calculator 52c outputs the correction amount calculated in Step S710 (S711). The displacement amount calculator 52b stores the value of the current displacement amount y as the previous displacement amount y' (S712).

In a case where the determination unit 52a determines that the vehicle speed is equal to or less than the first threshold (No in S703), the correction amount calculator 52c determines whether or not the correction amount c is zero (S704). If the correction amount c is not zero (No in S704), the correction amount calculator 52c determines whether a reset start flag is set to ON (S705). When the correction amount calculator 52c determines that the reset start flag is not set to ON (No in S705), the correction amount calculator 52c sets the reset start flag to ON and calculates a second offset amount ofs2 (S706). Next, the correction amount c is reduced by the calculated second offset amount ofs2 (S707). Next, Steps S701 to S703 are repeated again, and in a case where the determination unit 52a determines that the vehicle speed is equal to or less than the first threshold (No in S703), the correction amount calculator 52c determines whether or not the correction amount c is zero (S704). When the correction amount calculator 52c determines that the correction amount c is not zero (No in S704), the correction amount calculator 52c determines whether or not the reset start flag is set to ON. If the reset start flag is set to ON (Yes in S705), the correction amount c is reduced by the offset amount ofs2 again (S707). In this manner, when the correction amount c is gradually reduced and the correction amount c becomes zero, the correction amount calculator 52c determines that the correction amount c is zero in the determination in Step S704 (Yes in S704), and sets the reset start flag to OFF (S713).

For example, if the reset start flag is set to ON at a time t1, the correction amount C gradually decreases while the reset start flag is set to ON, and the correction amount becomes zero at a time t4 that is after a reset time Δt1 from the time t1. Note that the configuration may be such that the reset time Δt1 is set in advance, the offset amount in one sampling (one cycle from S701 to S707 in the flowchart) is set to c1 × ts / Δt1 from a sampling period ts and a correction amount c1 at the start of resetting, and the correction amount is reduced by c1 × ts / Δt1 at a time.

The correction controller 52 determines whether or not to continue the correction processing (S714). In a case where the correction processing is continued (Yes in S714), the processing returns to Step S701. In a case where the correction processing is not continued (No in S714), the processing shown in FIG. 20 is finished.

As described above, the correction processing device 50 reduces the correction amount c by a certain amount at a time when the vehicle speed is equal to or less than the first threshold. Accordingly, the position of the virtual image Iv gradually returns to the reference position P0. Since the position of the virtual image Iv does not suddenly change significantly, it is possible to prevent the occupant D from feeling uncomfortable with the change in the display position of the virtual image Iv. That is, it is possible to suppress a feeling of uncomfortableness due to the shift of the display position.

### (Seventh embodiment)

When the vehicle speed is equal to or less than the first threshold, the correction amount c is immediately reset to zero in the second embodiment. In the present embodiment, while the vehicle speed is equal to or less than the first threshold, the correction amount c is gradually reduced in a case where the correction amount c is equal to or more than the second threshold, and the correction amount is reset to zero in a case where the correction amount c is less than the second threshold.

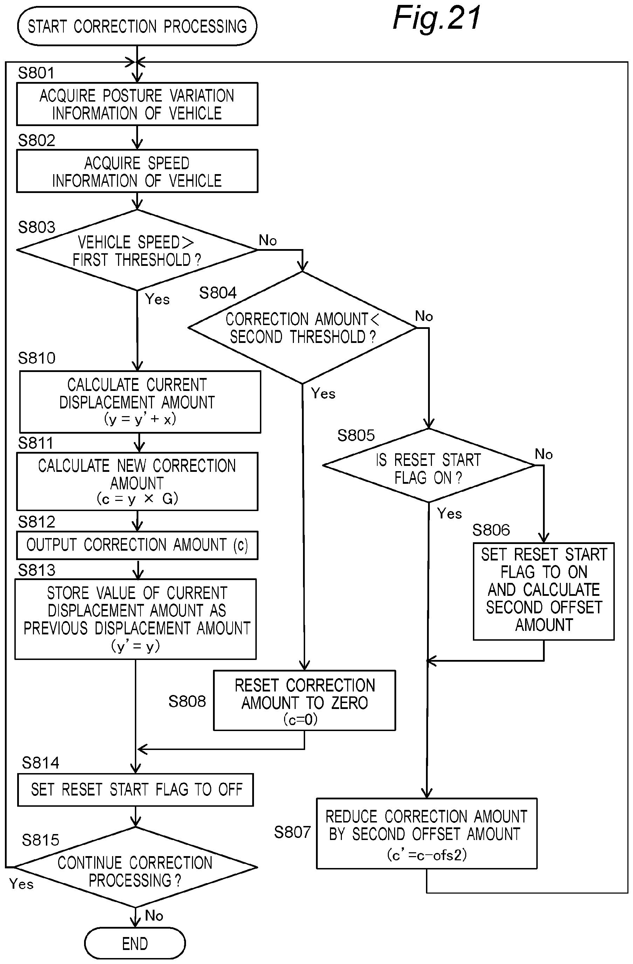

FIG. 21 shows the correction processing in a seventh embodiment. Steps S801 to S803, S810 to S813, and S815 of FIG. 21 of the seventh embodiment are the same as Steps S201 to S203, S204, S205, and S208 to S210 of FIG. 10 of the first embodiment. Further, Steps S805 to S807 and S814 of FIG. 21 of the seventh embodiment are the same as Steps S705 to S707 and S713 of FIG. 20 of the sixth embodiment, respectively.

The correction controller 52 acquires the posture variation information indicating the angular velocity of the vehicle 200 output from the gyro sensor 41 (S801). The correction controller 52 acquires the speed information indicating the vehicle speed from the display processing device 30 (S802). The determination unit 52a determines whether or not the vehicle speed is larger than the first threshold (S803).

In a case where the determination unit 52a determines that the vehicle speed is larger than the first threshold (Yes in S803), the displacement amount calculator 52b calculates the current displacement amount y based on the posture variation information (S810). The correction amount calculator 52c calculates the new correction amount c of the display position of the virtual image Iv based on the current displacement amount y (S811). For example, the correction amount calculator 52c calculates the new correction amount c from "c = y × G". The correction amount calculator 52c outputs the correction amount c calculated in Step S811 (S812). The displacement amount calculator 52b stores the value of the current displacement amount y as the previous displacement amount y'(S813).

In a case where the determination unit 52a determines that the vehicle speed is equal to or less than the first threshold (No in S803), the correction amount calculator 52c determines whether or not the correction amount c is less than the second threshold (S804). When the correction amount calculator 52c determines that the correction amount c is equal to or more than the second threshold (No in S804), the correction amount calculator 52c determines whether or not the reset start flag is set to ON (S805). When the correction amount calculator 52c determines that the reset start flag is not set to ON (No in S805), the correction amount calculator 52c sets the reset start flag to ON and calculates the second offset amount ofs2 (S806). Next, the correction amount calculator 52c reduces the correction amount c by the calculated second offset amount ofs2 (S807). Next, Steps S801 to S803 are repeated again, and in a case where the determination unit 52a determines that the vehicle speed is equal to or less than the first threshold (No in S803), the correction amount calculator 52c determines whether or not the correction amount c is less than the second threshold (S804). When the correction amount calculator 52c determines that the correction amount c is equal to or more than the second threshold (No in S804), the correction amount calculator 52c determines whether the reset start flag is set to ON. If the reset start flag is set to ON (Yes in S805), the correction amount c is reduced by the offset amount ofs2 again (S807). In this manner, when the correction amount c is gradually reduced and the correction amount c becomes less than the second threshold, the correction amount calculator 52c determines that the correction amount c is less than the second threshold in the determination in Step S804 (Yes in S804), and the correction amount calculator 52c resets the correction amount c to zero (S808). After that, the correction amount calculator 52c sets the reset start flag to OFF (S814).

For example, if the reset start flag is set to ON at the time t1, the correction amount gradually decreases while the reset start flag is set to ON, and the correction amount becomes less than a second threshold Sv at a time t5 that is after reset time Δt2 from the time t1. Note that the configuration may be such that the reset time Δt2 is set in advance, an offset amount in one sampling (one cycle from S801 to S807 in the flowchart) is set to (C1 - Sv) × ts / Δt2 from the sampling period ts and the correction amount c1 at the start of resetting, and the correction amount is reduced by (C1 - Sv) × ts / Δt2 at a time. If the correction amount is less than the second threshold Sv, the correction amount is immediately reset to zero.

The correction controller 52 determines whether or not to continue the correction processing (S815). In a case where the correction processing is continued (Yes in S815), the processing returns to Step S801. In a case where the correction processing is not continued (No in S815), the processing shown in FIG. 21 is finished.

As described above, when the vehicle speed is equal to or less than the first threshold, the correction processing device 50 reduces the correction amount by a certain amount at a time in a case where the correction amount c is equal to or more than the second threshold, and resets the correction amount to zero in a case where the correction amount c is less than the second threshold. In this manner, it is possible to perform the correction of the display position and the elimination of the accumulated error without causing any visual discomfort in accordance with the inclination of the vehicle 200.

### (Eighth embodiment)

FIG. 22 shows a configuration of a display device in an eight embodiment. A display device 600 of the present embodiment is a device that displays an image according to, for example, the traveling of the vehicle 200. The display device 600 is, for example, various information processing devices such as a personal computer, a tablet terminal, a smartphone, and the like. The display device 600 corresponds to, for example, a device in which the display processing device 30 and the correction processing device 50 of the projection system 100 of the first embodiment (FIG. 2) are integrally formed.

The display device 600 includes a communicator 61, a controller 62, a storage 63, an operation unit 64, and a display unit 65.

The communicator 61 has a function or a structure equivalent to that of the communicator 31 or the communicator 51 of the first embodiment.

The controller 62 has a function or a structure equivalent to that of the display controller 32 and the correction controller 52 of the first embodiment. Specifically, the controller 62 includes a determination unit 621, a displacement amount calculator 622, a correction amount calculator 623, and the display controller 624. The determination unit 621, the displacement amount calculator 622, the correction amount calculator 623, and the display controller 624 of the present embodiment correspond to the determination unit 52a the displacement amount calculator 52b, the correction amount calculator 52c, and the display controller 32 of the first embodiment, respectively. The display controller 624 and the correction amount calculator 623 communicate with each other bidirectionally.

The storage 63 corresponds to the storage 33 of the first embodiment and stores image data 330.

The operation unit 64 is a user interface for inputting various operations by the user. For example, the operation unit 64 is a touch panel provided on the surface of the display unit 65. The operation unit 64 may be realized by a keyboard, a button, a switch, or a combination of these, other than the touch panel.

The display unit 65 is composed of, for example, a liquid crystal display or an organic EL display. The display unit 65 displays, for example, an image indicated by the image data 330 at the display position indicated by "reference position P0 + correction amount c" designated by the display controller 624.

The display device 600 may be connected to a projector or may be incorporated in a projector. The display unit 65 may include a function or a structure corresponding to the projection device 10 of the first embodiment.

According to the present embodiment, an effect similar to those of the first to seventh embodiments can be obtained.

### (Other embodiments)

As described above, the embodiments have been described as an example of the technique disclosed in the present application. However, the technique in the present disclosure is not limited to this, and is also applicable to an embodiment in which changes, replacements, additions, omissions, and the like are appropriately made. In view of the above, other embodiments will be exemplified below.

In the above embodiment, the speed information is output from the information acquisition device 20 to the correction processing device 50 via the display processing device 30. However, the information acquisition device 20 may directly output the speed information to the correction processing device 50.

The above embodiment illustrates the case where the projection device 10, the information acquisition device 20, the display processing device 30, the posture detection device 40, and the correction processing device 50 are separate devices. However, a plurality of devices may be integrally formed as one device. For example, the display processing device 30 and the correction processing device 50 may be integrally formed as one device. The information acquisition device 20 and the display processing device 30 may be integrally formed as one device. The posture detection device 40 and the correction processing device 50 may be integrally formed as one device. The separately formed devices are connected in a manner communicable with each other by wire or wirelessly. Note that all the projection device 10, the information acquisition device 20, the display processing device 30, the posture detection device 40, and the correction processing device 50 may be formed as one device. In this case, the communicators 31 and 51 may be omitted.

The above embodiment describes the example in which the information acquisition device 20 includes the GPS module 21, the camera 22, and the vehicle speed sensor 23. However, the information acquisition device 20 may include a distance sensor that measures a distance and a direction from the vehicle 200 to a surrounding object, and may output distance information indicating the measured distance and direction to the display processing device 30. The information acquisition device 20 may include a navigation system. The information acquisition device 20 may include one or more of the GPS module 21, a distance sensor, the camera 22, an image processing device, an acceleration sensor, a radar, a sound wave sensor, and a white line detection device of advanced driver-assistance systems (ADAS). The GPS module 21, the distance sensor, the camera 22, the vehicle speed sensor 23, and the like having a function as the information acquisition device 20 may be built in one device or individually attached to the vehicle 200. Further, the vehicle speed information includes all pieces of information with which the speed or a stopped state of the vehicle 200 can be determined.

The above embodiment describes the example in which the posture detection device 40 includes the gyro sensor 41. However, the posture detection device 40 may include an acceleration sensor that detects the acceleration of the vehicle 200, and may output the detected acceleration as the posture variation information. The posture detection device 40 may include a vehicle height sensor that detects the height from the road surface, and may output the detected height as the posture variation information. The posture detection device 40 may include other publicly-known sensors. The posture detection device 40 may include one or more of the gyro sensor 41, the acceleration sensor, the vehicle speed sensor, and the like. In this case, the gyro sensor 41 having the function of the posture detection device 40, the acceleration sensor, the vehicle height sensor, and the like may be built in one device or individually attached to the vehicle 200.

The above embodiment describes the case where the moving body is the vehicle 200 such as an automobile. However, the moving body is not limited to the vehicle 200. The moving body may be a vehicle on which a person rides, and may be, for example, an airplane or a ship. The moving body may be an unmanned moving body that is capable of autonomous driving. The moving body may be one that vibrates instead of one that travels.

The above embodiment describes the case where the image is displayed in front of the moving body. However, the position where the image is displayed is not limited to the front. For example, the image may be displayed in the side direction or in the rear of the moving body.

The first to fifth embodiments describe the examples in which the display system is an HUD system. However, the display system does not need to be an HUD system. The display system may include a liquid crystal display or an organic EL display instead of the projection device 10. The display system may include a screen and a projector.

### (Summary of embodiment)

(1) A projection system of the present disclosure is a display system that displays an image in front of a windshield of a moving body. The display system includes: a projection device that projects light representing the image to the windshield; an information acquisition device that acquires speed information indicating a speed of the moving body; a detection device that detects posture variation of the moving body; a display processing device that controls a display position of the image based on a reference position and a correction amount; and a correction processing device that sets the correction amount based on posture variation of the moving body. The correction processing device determines, based on the speed information, whether or not a speed of the moving body is equal to or less than a first threshold. The correction processing device adjusts the correction amount to a value equal to or less than a correction amount immediately before a speed of the moving body becomes equal to or less than the first threshold in a case of determining that the speed of the moving body is equal to or less than the first threshold.
   In this manner, it is possible to suppress the position displacement of the image with high accuracy. For example, it is possible to prevent the image from being significantly displaced from the reference position when the speed is low.
(2) In the projection system of (1), the correction processing device may hold the correction amount at a correction amount immediately before a speed of the vehicle becomes equal to or less than the first threshold while the speed of the vehicle is equal to or less than the first threshold.
   In this manner, while the speed of the vehicle is equal to or less than the first threshold, it is possible to suppress the accumulation of correction errors.
(3) In the projection system of (1), the correction processing device may set the correction amount to zero so that the display position matches with the reference position while a speed of the vehicle is equal to or less than the first threshold.
   In this manner, the accumulated correction error can be eliminated when the speed of the vehicle is equal to or less than the first threshold.
(4) In the projection system of (1), the correction processing device may determine whether or not a speed of the moving body is equal to or less than the first threshold every time the correction amount is set, and reduce the correction amount by a certain amount in a case of determining that the speed of the moving body is equal to or less than the first threshold.
   This makes it possible to reduce the correction amount by a certain amount while updating the correction amount. Accordingly, it is possible to suppress the visual discomfort due to the shift of the display position of the virtual image and eliminate the accumulated error.
(5) In the projection system of (1), the correction processing device may further determine whether or not the correction amount is zero in a case of determining that a speed of the moving body is equal to or less than the first threshold, reduce the correction amount by a certain amount in a case of determining that the correction amount is not zero, and hold the correction amount at zero in a case of determining that the correction amount is zero.
   In this manner, the correction amount is held at zero at a timing at which the correction amount once becomes zero, so that a sudden change in the display position of the virtual image at the time of zero reset is not visually recognized. Accordingly, the influence of the drift of the gyro sensor can be completely eliminated.
(6) In the projection system of (1), the correction processing device may further determines whether or not the moving body is stopped in a case of determining that a speed of the moving body is equal to or less than the first threshold, further determine whether or not the correction amount is zero in a case of determining that the moving body is not stopped, and reduce the correction amount by a certain amount in a case of determining that the correction amount is not zero, and hold the correction amount at zero in a case of determining that the moving body is stopped.
   In this manner, when the moving body is decelerating so as to be stopped, the correction amount is reduced by a certain amount, and the correction amount is held at zero when the moving body is stopped. In this manner, it is possible to eliminate the accumulated error and prevent display displacement due to noise of the drift or the like at the time the moving body is stopped without causing any visual discomfort.
(7) In the projection system of (1), the correction processing device may reduce the correction amount by a certain amount at a time while a speed of the vehicle is equal to or less than the first threshold.
   In this manner, the display position can be gradually returned to the reference position without any visual discomfort.
(8) In the projection system of (1), while a speed of the vehicle is equal to or less than the first threshold, the correction processing device may hold the correction amount at a value immediately before the speed of the vehicle becomes equal to or less than the first threshold in a case where the correction amount set based on posture variation of the vehicle is equal to or more than a second threshold, and set the correction amount to zero so that the display position matches with the reference position in a case where the correction amount set based on posture variation of the vehicle is less than the second threshold.
(9) In the projection system of (1), while a speed of the vehicle is equal to or less than the first threshold, the correction processing device may reduce the correction amount by a certain amount at a time in a case where the correction amount set based on posture variation of the vehicle is equal to or more than a second threshold, and set the correction amount to zero so that the display position matches with the reference position in a case where the correction amount set based on posture variation of the vehicle is less than the second threshold.
(10) In the projection system of (1), the information acquisition device may include a vehicle speed sensor that detects the speed of the vehicle.
(11) In the display system of (1), the detection device may include at least one of a gyro sensor, an acceleration sensor, and a vehicle height sensor, that detect posture variation of the vehicle.
(12) The display system of the present disclosure may further include a projection device that projects light representing an image.
(13) In the display system of the present disclosure, the moving body may be a vehicle, and the image may be a virtual image displayed in front of a windshield of a vehicle.

The projection system according to all claims of the present disclosure is realized by cooperation with hardware resources, for example, a processor, a memory, and a program, and the like.

### INDUSTRIAL APPLICABILITY

The present disclosure can be applied to a display system in which light representing an image is projected on a windshield of a moving body to cause the image in front of the windshield to be visually recognized.

### DESCRIPTION OF SYMBOLS

- 10: Projection device
- 20: Information acquisition device
- 21: GPS module
- 22: Camera
- 23: Vehicle speed sensor
- 30: Display processing device
- 31: Communicator
- 32: Display controller
- 33: Storage
- 40: Posture detection device
- 41: Gyro sensor
- 50: Correction processing device
- 51: Communicator
- 52: Correction controller
- 52a: Determination unit
- 52b: Displacement amount calculator
- 52c: Correction amount calculator
- 100: Projection system

## Claims

1. A display system that displays an image in front of a windshield of a moving body, the display system comprising:
a projection device that projects light representing the image to the windshield;
an information acquisition device that acquires speed information indicating a speed of the moving body;
a detection device that detects posture variation of the moving body;
a display processing device that controls a display position of the image based on a reference position and a correction amount; and
a correction processing device that sets the correction amount based on the posture variation of the moving body,
wherein
the correction processing device determines, based on the speed information, whether or not a speed of the moving body is equal to or less than a first threshold, and
the correction processing device adjusts the correction amount to a value equal to or less than a correction amount immediately before a speed of the moving body becomes equal to or less than the first threshold in a case of determining that the speed of the moving body is equal to or less than the first threshold.

2. The display system according to claim 1, wherein
the correction processing device holds the correction amount at a correction amount immediately before a speed of the moving body becomes equal to or less than the first threshold while the speed of the moving body is equal to or less than the first threshold.

3. The display system according to claim 1, wherein
the correction processing device sets the correction amount to zero so that the display position matches with the reference position while a speed of the moving body is equal to or less than the first threshold.

4. The display system according to claim 1, wherein
the correction processing device determines whether or not a speed of the moving body is equal to or less than the first threshold every time the correction amount is set, and reduces the correction amount by a certain amount in a case of determining that the speed of the moving body is equal to or less than the first threshold.

5. The display system according to claim 1, wherein
the correction processing device further determines whether or not the correction amount is zero in a case of determining that a speed of the moving body is equal to or less than the first threshold,
reduces the correction amount by a certain amount in a case of determining that the correction amount is not zero, and
holds the correction amount at zero in a case of determining that the correction amount is zero.

6. The display system according to claim 1, wherein
the correction processing device further determines whether or not the moving body is stopped in a case of determining that a speed of the moving body is equal to or less than the first threshold,
further determines whether or not the correction amount is zero in a case of determining that the moving body is not stopped, and reduces the correction amount by a certain amount in a case of determining that the correction amount is not zero, and
holds the correction amount at zero in a case of determining that the moving body is stopped.

7. The display system according to claim 1, wherein
the correction processing device reduces the correction amount by a certain amount at a time while a speed of the moving body is equal to or less than the first threshold.

8. The display system according to claim 1, wherein
while a speed of the moving body is equal to or less than the first threshold, the correction processing device
holds the correction amount at a correction amount immediately before the speed of the moving body becomes equal to or less than the first threshold in a case where the correction amount set based on the posture variation of the moving body is equal to or more than a second threshold, and
sets the correction amount to zero so that the display position matches with the reference position in a case where the correction amount set based on the posture variation of the moving body is less than the second threshold.

9. The display system according to claim 1, wherein
while a speed of the moving body is equal to or less than the first threshold, the correction processing device
reduces the correction amount by a certain amount at a time in a case where the correction amount set based on the posture variation of the moving body is equal to or more than a second threshold, and
sets the correction amount to zero so that the display position matches with the reference position in a case where the correction amount set based on the posture variation of the moving body is less than the second threshold.

10. The display system according to claim 1, wherein
the information acquisition device includes a vehicle speed sensor that detects a speed of the moving body.

11. The display system according to claim 1, wherein
the detection device includes at least one of a gyro sensor, an acceleration sensor, and a vehicle height sensor, that detect posture variation of the moving body.

12. The display system according to any of claims 1 to 11, further comprising a projection device that projects light representing the image.

13. The display system according to any of claims 1 to 12, wherein
the moving body is a vehicle, and
the image is a virtual image displayed in front of a windshield of the vehicle.
